# EUROPEAN PATENT APPLICATION

(11) **EP 2 708 571 A1**
(43) Date of publication of application: **19.03.2014**
(21) Application number: 12006406.8
(22) Date of filing: 12.09.2012
(51) Int. Cl.: C08J 3/215, C08L 75/06, C08L 75/08, C08J 5/00, C08K 3/22, C08K 3/34, C08K 7/00, C08K 9/04, C08K 9/06, B32B 7/02, B32B 27/20, B32B 27/40, B32B 37/00

(54) **Composite materials and their uses as well as methods for the preparation thereof**

(71) Applicant: ETH Zürich, 8092 Zürich (CH)
(72) Inventor: Nicolosi Libanori, Rafael Augusto, 8046 Zürich (CH); Erb, Randall M., 8046 Zürich (CH); Studart, André R., 8044 Zürich (CH)

(57) **Abstract**

A reinforced composite material based on a polymer matrix with reinforcement particles embedded therein is proposed. The polymer matrix is based on a polymer with soft and hard domains, and the reinforcement particles comprise inorganic nano-platelets in the polymer matrix in a volume fraction in the range of 0.01 %-50%, wherein the inorganic nano-platelets have a thickness in the range of 0.3-50 nm and preferably a length and/or width in the range of 5-500 nm, with the proviso that the largest length and width is at least twice as large as the thickness; as well as inorganic micro-platelets in a volume fraction in the range of 1%-90%, wherein the inorganic micro-platelets have a thickness in the range of 10 nm-100 µm and preferably a length and/or width in the range of 100 nm-10 mm, with the proviso that the largest length and width is at least twice as large as the thickness. Also proposed are multilayer structures based on such layers, methods for making such multilayer structures and uses thereof.

## Description

### TECHNICAL FIELD

The present invention relates to composite materials in the form of individual layers as well as multilayer structures, and their uses as well as methods for the preparation thereof.

### PRIOR ART

Polyurethanes find widespread use in biomedical, structural and automotive applications. The mechanical behavior of this copolymer can be tuned from soft and rubbery to hard and stiff by simply changing the ratio of hard to soft segments in the macromolecule's backbone. The addition of reinforcing filler particles into polyurethanes greatly increases their versatility by extending the range of mechanical properties that can be achieved and possibly incorporating further functionalities.

Materials exhibiting mechanical behavior that can be tuned over a wide range by changing the fraction of one or more of their constituents are important in many technological and natural systems. Polymeric substrates potentially used in flexible electronics for example should have locally tuned mechanical response in order to reduce the mechanical mismatch between the flexible substrate and the hard metallic circuitry. Keeping one of the constituents as continuous phase, while varying the concentration of other building blocks to control the mechanical properties, is an interesting approach, because it potentially eliminates interfaces that work as stress concentrators.

Because of their rather limited choices with regards to chemical compositions, living organisms are able to build biological materials with very different mechanical properties by just controlling the distribution and arrangement of a few types of building blocks within the same continuous matrix. For example, materials like seashells, fish scales, bone and teeth have their degree of mineralization and the orientation of inorganic building blocks locally adjusted to vary the material's stiffness by nearly an order of magnitude. Remarkably, the concentration of inorganic phase dispersed within a polymeric matrix can be as high as 95 vol% in such mineralized biological materials. Although the underlying design principles are still being investigated, the organization of building blocks of different sizes into hierarchical structures is a recurring approach used by living organisms to tailor the properties of natural materials.

In contrast to hard biological materials, artificial polymers reinforced with inorganic particles become remarkably brittle above a critical volume fraction of the inorganic phase, which is characterized by a substantial decrease in the work of fracture. Since the critical particle concentration leading to such reduction in the work of fracture is typically lower than 30-50 vol%, the range of mechanical properties that can be covered using a given polymer matrix reinforced with inorganic particles is rather limited in artificial composites. Integration of different synthetic materials, such as polymers, metals and ceramics, into functional devices often results in mismatches in mechanical and thermal properties that favor premature failure of the solid interfaces due to stress localization. Examples of functional devices whose durability is impaired by premature interfacial failure are numerous and range from biomedical implants in orthopedics to metal-composite joints in automotive and aerospace applications to inorganic functional devices in high-performance flexible electronics. In some applications, this issue can be circumvented by developing functionally-graded heterogeneous materials (FGM) whose through-thickness chemical composition is gradually changed to reduce mismatches in the elastic and thermal properties of the homogeneous materials to be integrated. However, this approach has been limited to purely inorganic systems whose elastic moduli lie within the same order of magnitude, as is the case for example of ceramic thermal barrier coatings deposited on metals.

Constructing heterogeneous composite materials with locally tuned mechanical properties in all three dimensions is a recurring strategy in nature to achieve unusual mechanical properties and to couple surfaces with very different elastic moduli. For instance, natural filaments such as Byssus threads combine stretchability and surface hardness to firmly attach the soft body of mussels to the stiff surface of rocks, while minimizing abrasion due to the eroding action of sand particles in the water. This is achieved by tuning the local mechanical properties of the filaments in both the radial and axial directions via the formation of metal-organic coordination bonds throughout the structure. Likewise, the teeth of many vertebrates and invertebrates exhibit a 3D bilayer structure that combines a remarkable surface hardness to withstand mastication loads with a high toughness in the inner layer to resist crack propagation. Such properties are achieved by tailoring the concentration and orientation of reinforcing mineral particles across the material. The local elastic modulus and hardness of such dense, heterogeneous natural composites can change up to a factor of 10 throughout the structure. Besides three-dimensionality, heterogeneous biological composites are often built from an entangled continuous polymer matrix reinforced to different extents with a limited choice of inorganic reinforcing elements. Such an interpenetrating polymer matrix is believed to be key in ensuring efficient stress transfer and in avoiding local failure between regions of different elastic moduli.

### SUMMARY OF THE INVENTION

New reinforcing strategies are thus required to circumvent the loss in work of fracture and further increase the strength and stiffness attainable with artificial composites. Here it is proposed to combine inorganic reinforcing particles at two different length scales to produce large-area highly structured polyurethane-based composites with a wide spectrum or range of properties using the same polymer matrix. This is backed up by an experimental and theoretical investigation on the processing and mechanical properties of the proposed hierarchical composites. The selective reinforcement of the hard domains of polymers, in particular polyurethane, with nanoplatelets is shown to be key to allow for the addition of high concentrations of microplatelets before the work of fracture is significantly reduced. Blending the polyurethane matrix with suitable polymers such as polyvinylpyrrolidone further increases the strength and stiffness of the hierarchically reinforced composites to levels that cannot be achieved with reinforcements at one single length scale.

Herein, according to a first aspect of the invention, polymer-matrix based, in particular polyurethane-based thermoplastic polymers are proposed, which are hierarchically reinforced with nanoplatelets, e.g. laponite nanoplatetets, and microplatelets, e.g. alumina microplatelets, to reach mechanical strength and elastic modulus that are, respectively, 7-and 29-fold higher than that of the pure polymer matrix (91.7 MPa and 6.97 GPa, respectively). The selective reinforcement of the polyurethane hard domains with laponite nanoplatelets can be used to keep the polymer matrix sufficiently ductile for the incorporation of high concentrations of (alumina) microplatelets. Effective reinforcement of the polymer with microplatelets of different surface chemistries was in particular possible after annealing the composite at 130°C to promote strong bonding at the oxide/polymer interface. Large-area composite films and bulk parts exhibiting good alignment of alumina microplatelets can indeed be obtained through e.g. conventional tape-casting. The concept of hierarchical reinforcement demonstrated can be used to obtain composite materials covering a wide range of mechanical properties using only a few reinforcing building blocks within the same polymer matrix.

Despite the improved mechanical and thermal interfacial coupling offered by artificial FGMs, the three-dimensional nature and the unique local control of structure and properties observed in heterogeneous biological composites have not yet been achieved in synthetic systems. Obtaining such level of 3D control in artificial heterogeneous composites would allow to not only extend the lifetime of existing functional devices prone to interfacial failure but also to develop new materials for mechanically challenging demands. These include for example dental restorations for prosthetic dentistry that more closely resemble the mechanical properties of natural tooth, elastomeric substrates for flexible electronics that are bendable and stretchable but yet locally stiff, and synthetic bio-scaffolds for the replacement of intervertebral discs and for the regeneration of graded tendon/ligament-to-bone insertions. In addition to addressing such mechanical challenges, the deliberate local reinforcement of weak regions achievable with such heterogeneous composites also represents an economical and environmental-friendly approach to attain the required mechanical performance while minimizing the use of limited and costly resources.

According to a second aspect of the invention heterogeneous manufactured composites are proposed exhibiting elastic moduli spanning over several orders of magnitude and which can be obtained by tuning the local reinforcement of an entangled continuous polymer matrix using reinforcing elements at multiple hierarchical levels. The unusual sets of properties that can be achieved with this approach are illustrated by producing 3D polymer-based composites exhibiting local elastic modulus on the surface that approaches that of the hardest biological materials like bone and tooth enamel, while still being reversibly stretchable up to 300% strain on a global scale without failure.

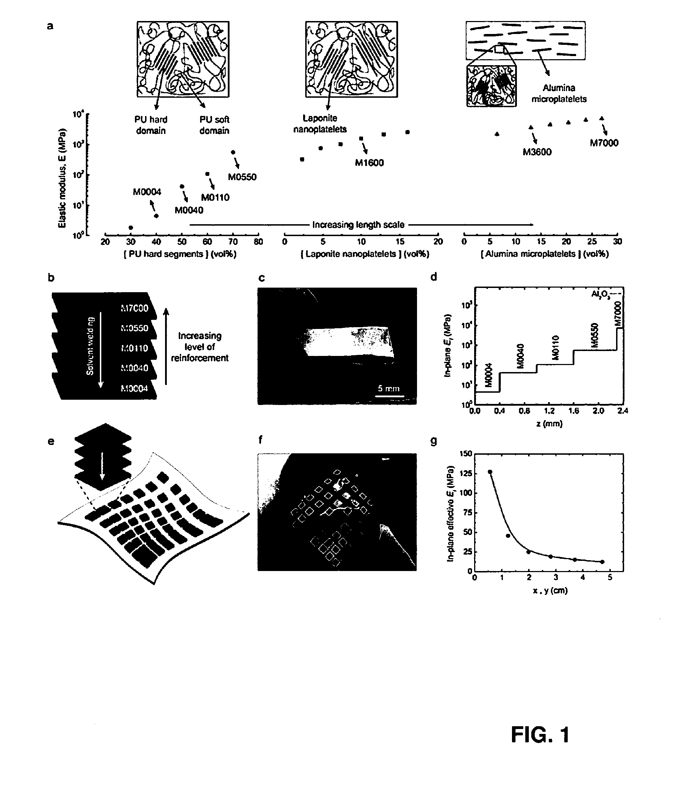

Heterogeneous composites with different elastic moduli are proposed by hierarchically reinforcing a polymer matrix with soft and hard domains, such as a polyurethane (PU), with (1) PU hard segment domains, (2) inorganic nanoplatelets and (3) inorganic microplatelets at progressively larger length scales (see Figure 1a). Reinforcement of the soft (PU) matrix with (PU) hard segments is accomplished by increasing the relative ratio of hard to soft segments (HS:SS) during polymer (e.g. polyurethane) synthesis (Figure 1a). Further stiffening of (polyurethane) matrices is achieved through the selective reinforcement of the (PU) hard domains with nanoplatelets, e.g. laponite nanoplatelets. Microplatelets, e.g. alumina microplatelets, are finally used to reinforce the laponite-containing (polyurethane) matrix at the next hierarchical level, in line with the above first aspect of the invention. Following this procedure, individual polymer (e.g. polyurethane) films with elastic moduli that can be tuned over a wide range, e.g. between 4 MPa and 7 GPa, can be obtained. In Figure 1a, the individual polyurethane compositions are indicated by the letter M followed by their elastic moduli in MPa.

Heterogeneous composites with deliberate local stiffness can be prepared by solvent welding individual films with different levels of reinforcements into one single component, as schematically illustrated in Figure 1b. In the solvent welding process, two film surfaces are first wetted by a good solvent and pressed together to allow for polymer entanglement, which is then preserved upon solvent evaporation. Such entanglement eliminates the interfaces between individual films, leading to heterogeneous composites with efficient stress transfer throughout the structure. The upper limit in elastic modulus achieved with the hierarchical polymer-based composite (7 GPa) can be further increased on the surface through the deposition of a 100nm-thick layer of Al₂O₃ via atomic layer deposition (150 °C / 160 minutes). Also possible is the establishment of the inter-layer entanglement by lamination (pressure and/or heat), coextrusion, sequential molding onto each other, e.g. sequential injection molding and/or by direct application by casting of platelet/polymer suspensions onto consolidated layers with variable reinforcement concentrations, e.g. in a printing or process.

Using this approach, 2mm-thick heterogeneous composites with an out-of-plane gradient in elastic modulus spanning over five orders of magnitude can be for example obtained (Figure 1c). The resulting composite is locally stiffer than tooth enamel on one side (E₁ ~ 10² GPa), while being softer than skin on the other (E₁ ~ 1-5 MPa, see Figure 1d). The extreme span in stiffness achievable within a single material free of macroscopic interfaces is far greater than that found in biological materials and thus opens numerous possibilities for the design of synthetic heterogeneous composites with deliberate local mechanics. For instance, modular patches with any pre-defined E₁-profile can be solvent welded at different pre-selected locations on the surface of a polymer substrate to create 3D composites with tunable elastic (Young) modulus profiles in the in-plane and out-of-plane directions (Figure 1e,f). In this example, not only the internal microstructure but also the shape of the composite is designed to effectively fulfill a mechanical function, alike the design strategy of many biological materials. The out-of-plane E₁-profile is determined by the local concentration of reinforcing elements throughout the cross-section of each modular patch at the microscale. The in-plane E₁-profile is controlled by the geometry and average elastic moduli of the patches and of the underlying substrate at the macroscale (Figure 1e-g). All these parameters can be varied independently and in a modular fashion, providing a wide design space for tailoring the local elastic moduli of the heterogeneous composite in both the in-plane and out-of-plane directions.

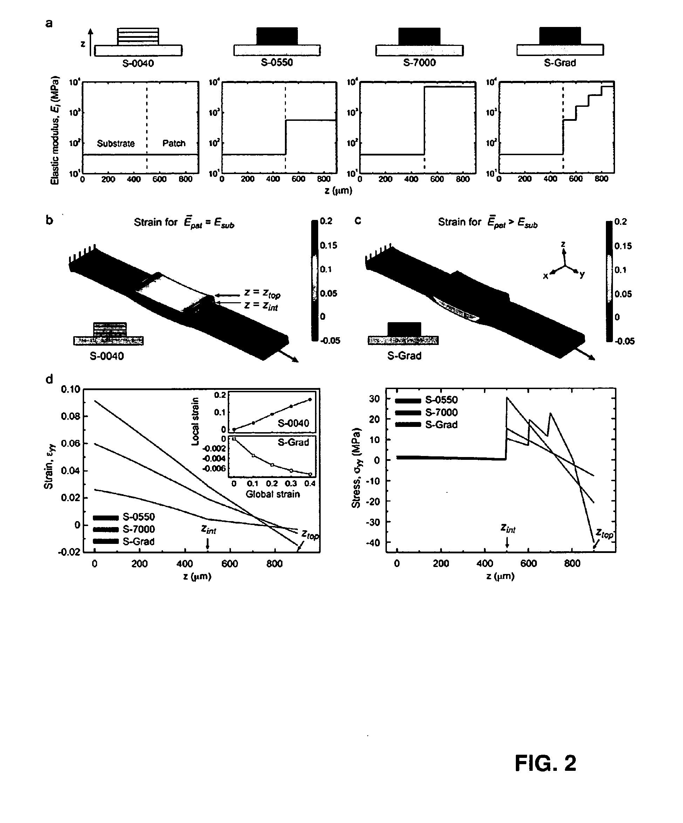

To further explore the unusual set of properties offered by 3D heterogeneous composites with tailored E₁ profiles, we investigated specific architectures that would combine high global stretchability with minimum local strains at specific surface sites. The response of 3D composites with deliberate E₁ profiles to stretching is first evaluated by simulating the local mechanical stresses and strains across representative patch-substrate modules (Figure 2) using finite element method (FEM) analysis. Each module consists of a prismatic patch with designed E₁ profile deposited onto a ribbon of stretchable substrate. Four different patch-substrate module designs were investigated: two with a constant E₁ across the patch, one with a graded E₁ profile, and one control module with patch and substrate of same elastic modulus. These different hypothetical arrangements are shown in Figure 2a and referred to throughout the text using the letter S followed by the elastic modulus of the patch (except for the graded patch, which is named S-Grad).

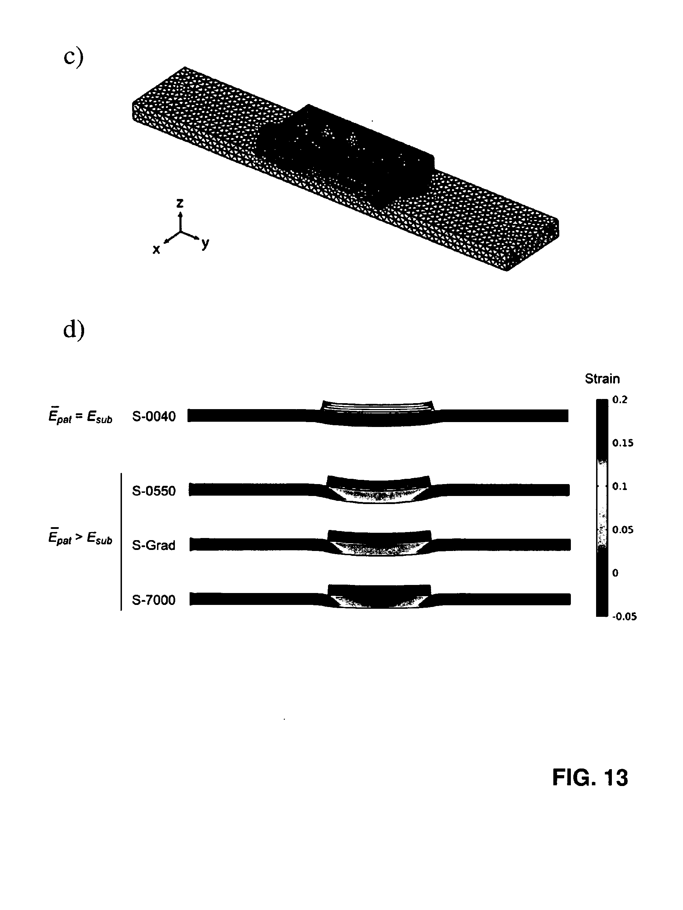

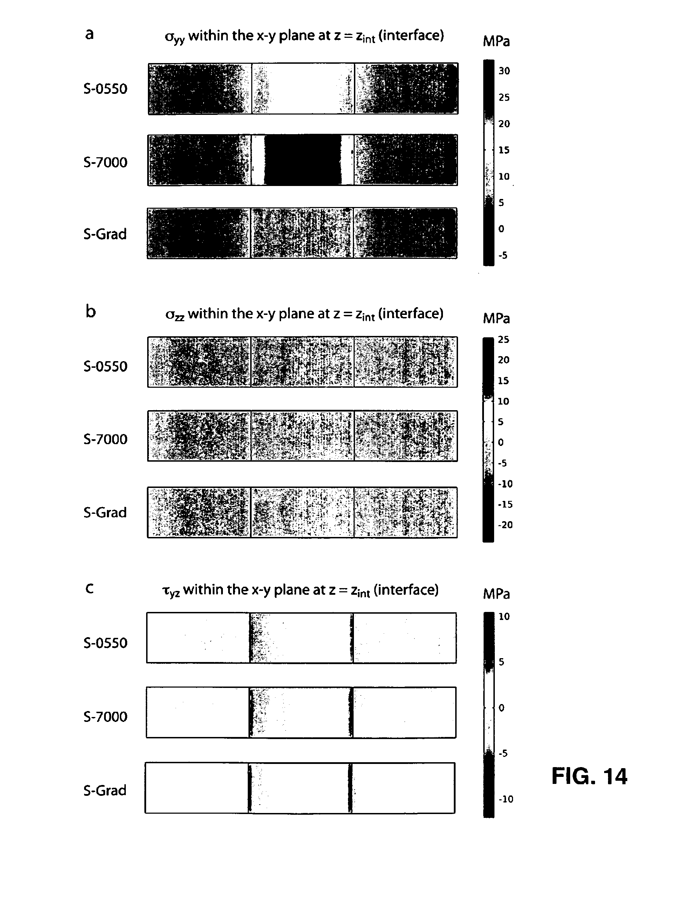

FEM simulations revealed that patches respond differently to the external tensile strain, depending on whether their average elastic moduli (*E̅ₚₐₜ*) are equal or higher than that of the underlying substrate (E_{sub}). For *E̅ₚₐₜ* > E_{sub}, patches undergo significant inwards bending during tensile stretching of the representative modules. This effect generates compressive (negative) strains on the patch surface and tensile (positive) strains across the substrate, as shown in Figure 2c. In contrast, the patch exhibiting the same elastic modulus as the substrate (*E̅*ₚₐₜ = E_{sub}, S-0040) experiences a combination of bending and stretching. This leads to curved surfaces at the edge of the patch and a stretched area with high tensile strains at its center (Figure 2b and 13d). Among the patches with *E̅ₚₐₜ* > E_{sub}, we observe that bending becomes less pronounced as the average stiffness of the patch increases (higher *E̅ₚₐₜ*). The radius of curvature of the region that underwent bending under 25% applied strain was found to be 9.7, 17.2 and 63.2 mm for the specimens S-0550, S-Grad and S-7000, respectively. As a result, the stiffest patch (S-7000) offers the advantage of a lower compressive strain on the top surface and a lower tensile strain at the bottom of the underlying substrate (Figure 2d). Because of its stiff top layer, the graded patch (S-Grad) experiences surface compressive strains nearly as low as that of the stiffest patch (S-7000). In addition to the strains at the surface, the elastic modulus profile of the patch also affects the mechanical stability and stretchability of the module, since local mismatches in E₁ may cause excessive stress concentrations within the structure and thus premature failure of the composite upon stretching. Analysis of the stress distribution throughout the cross-section of the simulated modules revealed the expected stress peaks at regions where the elastic modulus abruptly changes (Figure 2d). While the stress and strain indicated in Figure 2d refer only to the normal values at the center of the patch, similar trends were observed for the shear values at the edge of the simulated patches (see Figure 14). The less abrupt changes in local elastic modulus throughout the architectures S-0550 and S-Grad lead to lower tensile stress peaks and thus a presumably higher resistance against local delamination during stretching. Because of its graded architecture, the module S-Grad better distributes the stress along the height of the patch, which contrasts to the sharp stress peak observed at the bottom of the stiffest homogeneous patch (S-7000, z = zᵢₙₜ). Overall, the FEM simulations indicate that the graded architecture is the most suited to minimize the strain on the patch surface while preventing premature failure of the stretched composites through reduced mechanical mismatches throughout the structure.

More generally speaking, the present invention relates to polymeric reinforced composite materials based on a polymer matrix with reinforcement particles embedded therein, wherein the polymer matrix is based on a polymer with soft and hard domains, wherein the reinforcement particles comprise
1. inorganic nano-platelets in the polymer matrix in a volume fraction in the range of 0.01%-50%, wherein the inorganic nano-platelets have a thickness in the range of 0.3-50 nm preferably in combination with a length and/or width in the range of 5-500 nm, with the proviso in this case that the largest length and width is at least twice as large as the thickness;
2. as well as inorganic micro-platelets in a volume fraction in the range of 1%-90%, wherein the inorganic micro-platelets have a thickness in the range of 10 nm-100 µm, preferably 50 nm- 100 µm, preferably in combination with a length and/or width in the range of 100 nm-10 mm, with the proviso in this case that the largest length and width is at least twice as large as the thickness.

According to a first preferred embodiment, the nano-platelets are present in a volume fraction in the range of 1-10% and/or the micro-platelets are present in a volume fraction in the range of 10-35%.

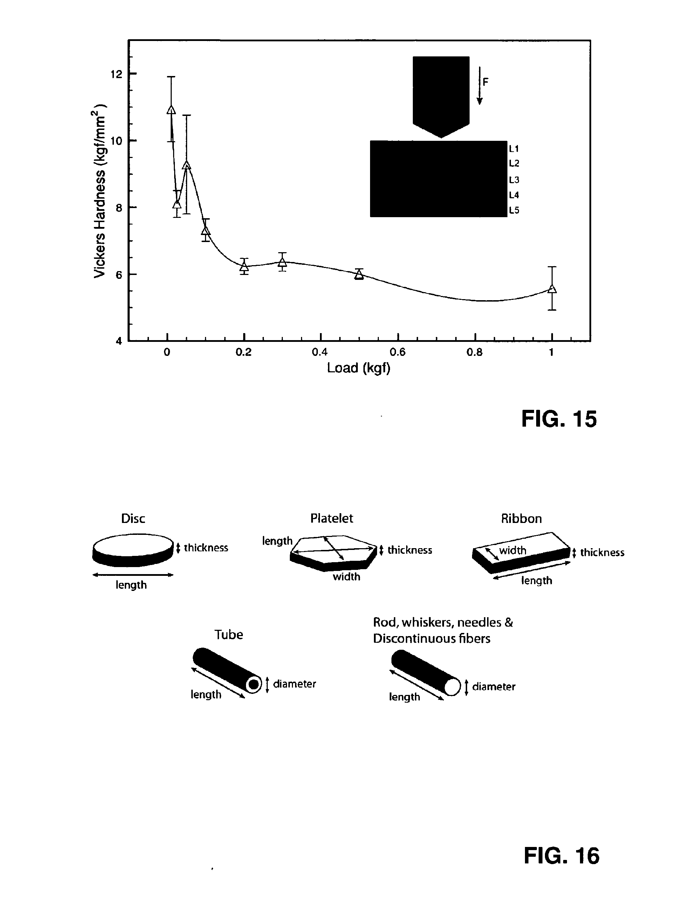

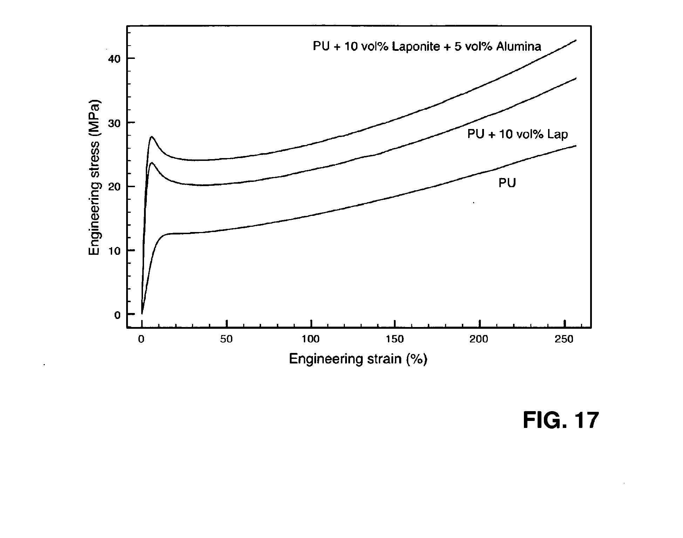

For a definition of the characterizing parameters for the nano-platelets and/or micro-platelets reference is made to figure 16.

According to another preferred embodiment, the inorganic nano-platelets have a thickness in the range of 0.5-10 nm and/or a length and/or width in the range of 20 nm-200 nm, and wherein preferably the inorganic nano-platelets are montmorillonite, clay and/or mica particles.

According to yet another preferred embodiment, the inorganic micro-platelets have a thickness in the range of 10nm- 50 µm or 100 nm-10 µm and/or a length and/or width in the range of 200 nm-5 mm, with a thickness preferably in the range of 200 nm-500 nm, and wherein preferably the inorganic micro-platelets are based on alumina, silicon carbide, glass, aluminium boride, graphene, graphite or combinations thereof, wherein further preferably the inorganic micro-platelets are covalently or non-covalently surface modified with at least one coupling agent, preferably selected from the group of APTES, ND and PVP.

The expression "**nano-platelets**" in the context of this invention shall include the following systems:
Nanodiscs/nanoplatelets (e.g. clays, mica): thickness larger than 5 Å and smaller than 50 nm, preferably between 5 Å and 10 nm; Length and width (see figure 16) larger than 5 nm, preferably between 20 nm and 1 µm.
Nanorods/nanotubes (e.g. carbon nanotubes, halloysite minerals, ZnO and hydroxyapatite nanorods): diameter larger than 10 Å and smaller than 1 µm, preferably between 5 nm and 100 nm. Length larger than 10 nm, preferably between 20 nm and 10 µm.
Nanoribbons: thickness larger than 5 Å and smaller than 50 nm, preferably between 5 Å and 10 nm; Length and width larger than 1 nm and smaller than 100 µm, preferably between 20 nm and 1 µm with the proviso that the length and width are at least twice, preferably at least five times larger than its diameter.

The expression "**micro-platelets**" in the context of this invention shall include the following systems:
Microdiscs/microplatelets (e.g. alumina, silicon carbide and aluminum boride platelets, graphene, graphite): thickness in the range of 0.3 nm-100 µm, preferably 50 nm-100 µm,
more preferably in the range of 100 nm-10 µm; length in the range of 100 nm - 10 mm with the proviso that the length is at least twice, preferably at least five times larger than the thickness and with the proviso that the width is larger than the thickness, preferably at least twice as large as the thickness.
Microfibers, whiskers, needles, microrods, microtubes produced via templating methods (e.g. chopped silica fibers, carbons fibers, aramide fibers, ZnO rods, tubes produced via templating methods): diameter in the range of 0.05 µm -100 µm, preferably in the range of 1 µm -10 µm; length in the range of 2 µm - 50 mm with the proviso that the length is at least twice, preferably at least five times larger than the diameter.
Micro-ribbons (e.g. glass): thickness in the range of 50 nm-100 µm, preferably in the range of 500 nm-10 µm; Length and width larger than 100 nm and smaller than 50 mm, preferably between 1 µm and 1000 µm with the proviso that the length and width are at least twice, preferably at least five times larger than the diameter.
Long, continuous fiber reinforcement can also be used to reinforce the stiffest regions where high ductility is not required.

The polymeric reinforced composite material can be in the form of a layer with a thickness of at least 1 nm, preferably in the range of 100 µm-200 µm, and wherein preferably the layer as being annealed at a temperature of at least 60°C, preferably in the range of 80-140°C, preferably within a time span of at least 10 min., preferably in the range of 30 min-5 hours, more preferably in the range of 2-4 hours, preferably at the pressure in the range of 0.1 mbar-2 bar, preferably in the range of 0.8-1.2 bar.

The polymer matrix can be based on a semicrystalline block copolymer, preferably containing hydrophilic and hydrophobic segments, based on at least one of the following systems: diols, dimerdiols, polyoxyalkylenes, polytetramethylene oxide, polyoxymethylene, polyethyleneglycol, polyurethanes, polyureas, polyamides, polybutyrene, polyisoprene, polymethacrylates, polycarbonates, polyolefins, polyesters, polyethers, polyacrylic acids, polyacetals, polyethylene terephthalate, polyacrylonitrile, polystyrene, epoxy and combinations thereof, in particular based on polyurethane, particularly on C2-C6 alkylenediol, and aromatic diisocyanates forming hard segments and on polyesters, preferably adipic acid based polyesters forming the soft domains, wherein preferably the polymer matrix is characterized by a glass transition temperature in the range of above -100°C, preferably in the range of -80°C- -10°C and a glass transition temperature or melting temperature or decomposition temperature lower than 300°C, preferably in the range of 60-180°C.

The polymer matrix can also be based on a blend exhibiting phase segregation with hard phase dispersed in a soft matrix with phases based on polytetramethylene oxide, polyoxymethylene, polyethyleneglycol, polyurethanes, polyureas, polyamides, polybutyrene, polyisoprene, polymethacrylates, polycarbonates, polyolefins, polyesters, polyethers, polyacrylic acids, polyacetals, polyethylene terephthalate, polyacrylonitrile, polystyrene and epoxy.

The present invention furthermore relates to a multilayer polymeric reinforced composite material comprising at least two adjacent polymeric reinforced composite material layers as given above joined in a solvent welding and/or direct solution casting, spraying, printing process, coextrusion or injection molding, wherein the adjacent layers have different reinforcement degrees in as far as the nano-platelets and/or the micro-platelets are concerned, leading to a gradient in elastic moduli in a direction perpendicular to the layer plane of at least 10 MPa/mm, preferably in the range of 1000-100,000 MPa/mm.

The difference in volume fraction loading of nano-platelets and/or micro-platelets in the adjacent layers is preferentially at least 0.01 % or at least 0.5%, preferably at least 1%, more preferably in the range of 2-5%.

The multilayer polymeric reinforced composite material may comprise at least 3, preferably at least 5, or most preferably in the range of 5-15 or 5 - 50 mutually adjacent polymeric reinforced composite material layers joined in a solvent welding and/or direct solution casting, spraying or printing process, wherein preferably the multilayer polymeric reinforced composite material is provided as a patch or strip on or embedded in an elastic carrier layer, wherein further preferably the elastic carrier layer is based on the same or similar polymer material as the polymer matrix of the multilayer polymeric reinforced composite material.

Along a direction essentially perpendicular to the layer plane sequential adjacent polymeric reinforced composite material layers can have increasing volume fraction loadings of nano-platelets and/or micro-platelets, and/or have at least partly alternating volume fraction loadings of nano-platelets and/or micro-platelets.

The Vickers hardness of such a multilayer composite can be highly dependent as a function of the indentation load. This is illustrated in the attached Figure 15.

On its surface with the highest elastic modulus such a multilayer polymeric reinforced composite material can be provided with at least one electrically conducting layer and/or electronic component.

Furthermore the present invention relates to a method for making a multilayer polymeric reinforced composite material as given above, wherein in a first step the inorganic nano-platelets and inorganic micro-platelets are, if need be after surface modification thereof, suspended in a solvent or solvent mixture, the polymeric matrix material or a corresponding precursor material is added to the suspension, and this composite suspension is applied in a solution casting, spraying or printing process to form, after drying or consolidation, and optional annealing, a layer of polymeric reinforced composite material, and wherein on such dried/consolidated layer of polymeric reinforced composite material one or several further polymeric reinforced composite material layers are applied with different reinforcement degrees in as far as the nano-platelets and/or the micro-platelets are concerned, wherein these further layers can either be first produced from differently reinforced composite suspensions and dried/consolidated, and subsequently solution welded to the surface of the initial layer, or can be sequentially directly applied in a solution casting, spraying or printing process from differently reinforced composite suspensions and dried/consolidated, wherein the layers can either be individually annealed and/or the multilayer polymeric reinforced composite material block can be as a whole after the joining of the layers. Additionally, layers can also be produced by coextrusion or sequential injection molding from differently reinforced molten polymers, wherein the layers are naturally integrated as a whole during sequential injection molding steps.

Last but not least the present invention relates to various uses of such multilayer polymeric reinforced composite materials, e.g. as a substrate or a housing for an electronic and/or electric component, as part of or a complete implant or surgery element, as a construction material and as wearables.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows hierarchical heterogeneous composites with locally tuned elastic properties, wherein in (a) Elastic modulus of polyurethane-based composites reinforced with different volume fractions of hard segments (left), laponite nanoplatelets (center) and alumina microplatelets (right) at increasing hierarchical levels are given; arrows indicate the compositions of reinforced polyurethanes used, which are identified by the letter M followed by their elastic moduli in MPa units; (b-d) heterogeneous composite with extreme elastic gradient in the out-of-plane direction (d) prepared through solvent welding of individual layers with different reinforcement levels and atomic layer deposition of 100nm-thick alumina layer (b); the solid black line in (d) indicate the in-plane elastic modulus as a function of the sample height z, respectively; (e-g) 3D heterogeneous composite with tunable elastic moduli in the out-of-plane and in the in-plane directions made by welding modular patches onto an elastomeric polyurethane film (e);
- Fig. 2: Finite element method analysis of the local mechanics of representative patch-substrate modules with tunable elastic properties, wherein in (a) Elastic modulus profiles of the investigated modules, which are identified by the letter S followed by the assumed elastic moduli in MPa units; (b,c) distribution of strains ε_{yy} for the architectures S-0040 and S-Grad after applying a longitudinal global strain (ε_{g}) of 25% in the y-direction; (d) ε_{yy} (left) and σ_{yy} (right) profiles across the height of different patch-substrate architectures (ε_{g} = 25%); the inset shows the variation of the local strain (ε_{yy}) at the center of the top surface of the patch as a function of the global strain (ε_{g}) applied to the substrate for the S-0040 and S-Grad modules;

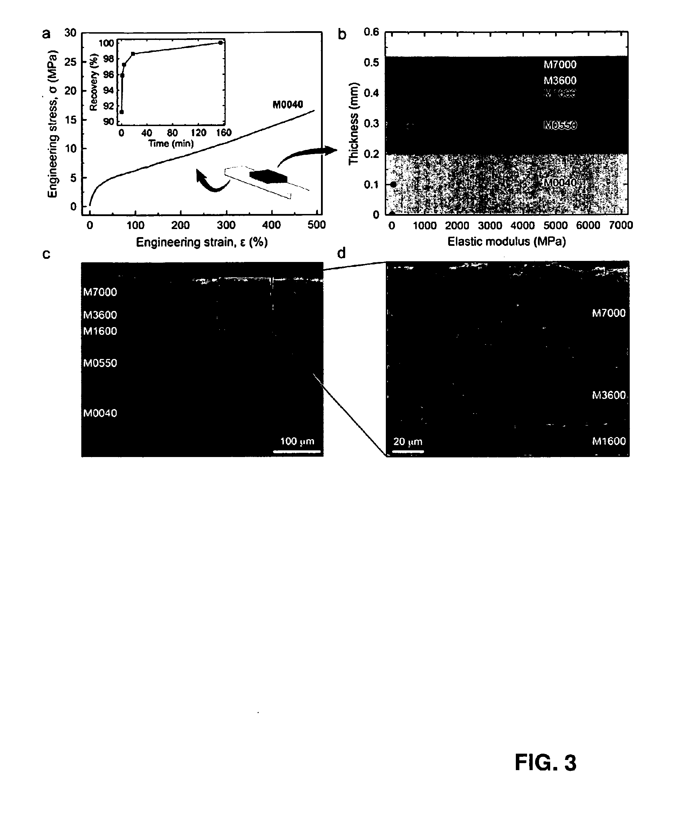

- Fig. 3: Mechanics and microstructure of synthetic heterogeneous composites with graded patch architecture; (a) stress-strain behavior for the elastomeric polyurethane containing 50% of hard segments used as underlying substrate (strain rate: 2.5 mm/min); the inset shows the full recoverability of the elastomer after a strain of 80 % is released at room temperature; (b) in-plane elastic modulus profile across the height (z) of the graded patch; (c,d) SEM images of the graded patch highlighting the absence of macroscopic interfaces after solvent welding;

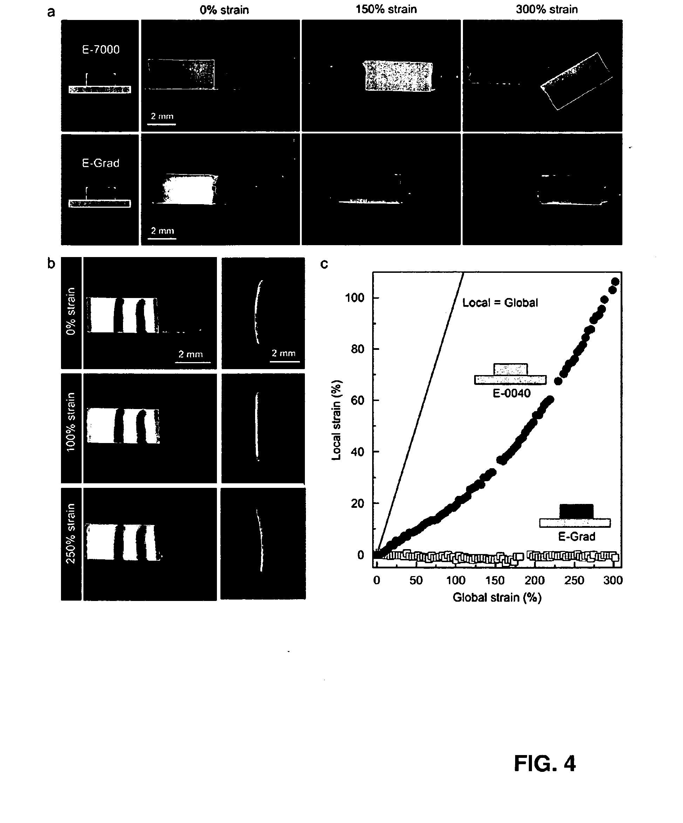

- Fig. 4: Failure resistance and local surface strain of synthetic graded composites in comparison to non-graded controls; the experimental samples are identified by the letter E followed by the elastic modulus in MPa; (a) Resistance of the graded architecture against localized failure under stretching as opposed to the delamination observed for the non-graded sample containing the stiffest patch; (b) Front and lateral views of graded specimens (E-Grad) under increasing global tensile strains, highlighting the inwards bending of the patch upon stretching; (c) Local strain lower than 1% on the surface of graded patches for increasing global tensile strains, as opposed to the increasing local deformations observed for the control sample;

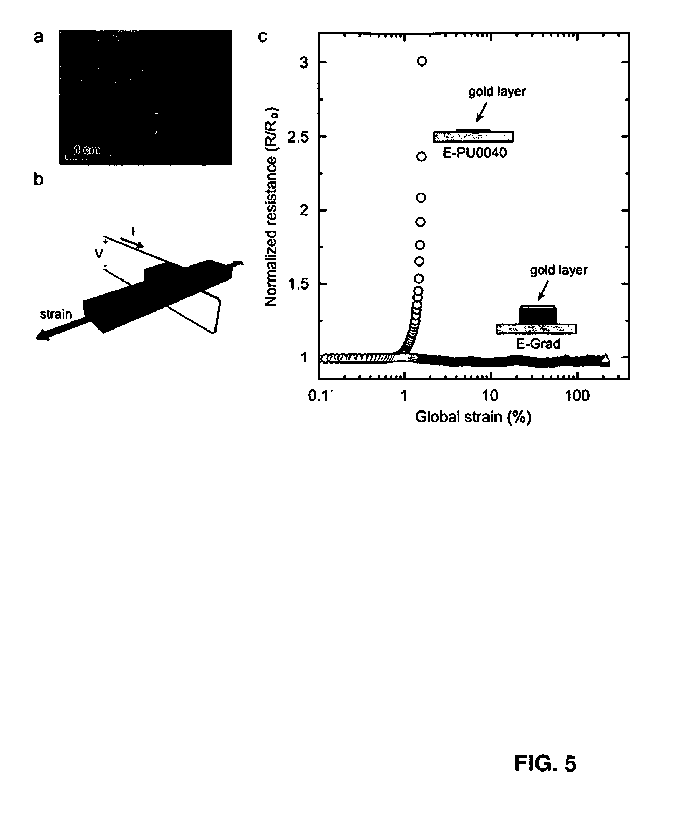

- Fig. 5: Electrical response of a thin gold layer deposited on the surface of a graded patch while the underlying substrate is globally stretched; (a) photograph of the sample after gold deposition and electrically contacted; (b) schematics of the setup used for the simultaneous electrical and mechanical measurements; (c) normalized electrical resistance of the gold film deposited on the graded patch as a function of increasing global strains; a gold layer sputtered directly onto the elastomeric substrate was used as control.

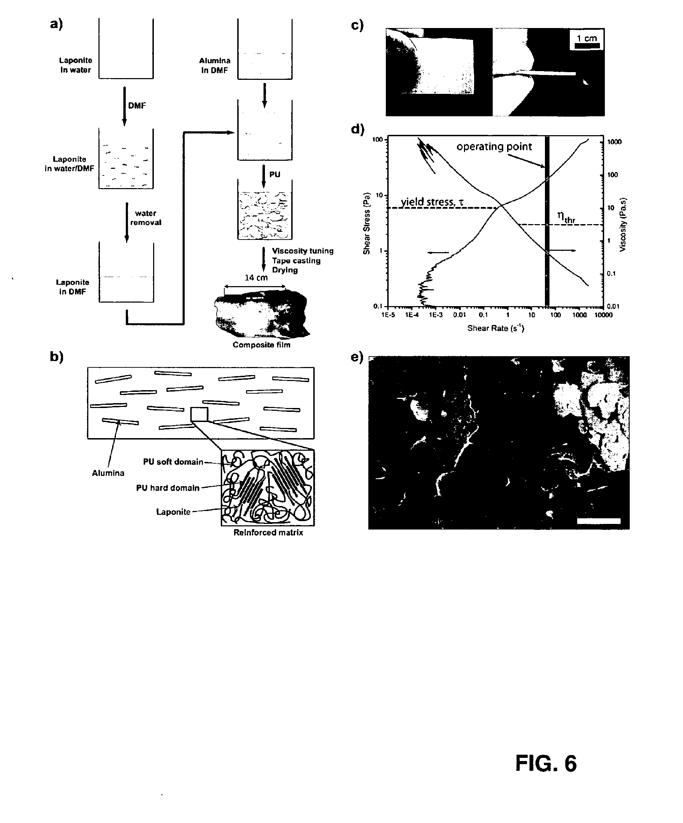

- Fig. 6: a) Flowchart describing the solvent-exchange processing route used to prepare the hierarchically reinforced composites; b) Schematic drawing of the highly structured composite consisting of polyurethane (PU) hierarchically reinforced with laponite nanoplatelets and alumina microplatelets; c) 1.5 mm-thick composite parts obtained by stacking and hot-pressing individual tape-cast films; d) Rheological behavior prior to tape casting of a typical suspension containing laponite platelets, polyurethane and DMF (laponite:PU volume ratio of 1:9 and PU:DMF weight ratio of approximately 1:35); The yield stress of the suspension, the operating point during tape casting, and the estimated threshold viscosity (ηₜₕᵣ) needed to avoid sedimentation of microplatelets in the suspension within 6 hours are also indicated in the graph; e) SEM micrograph of the alumina microplatelets used in this study (scale bar: 10 µm);

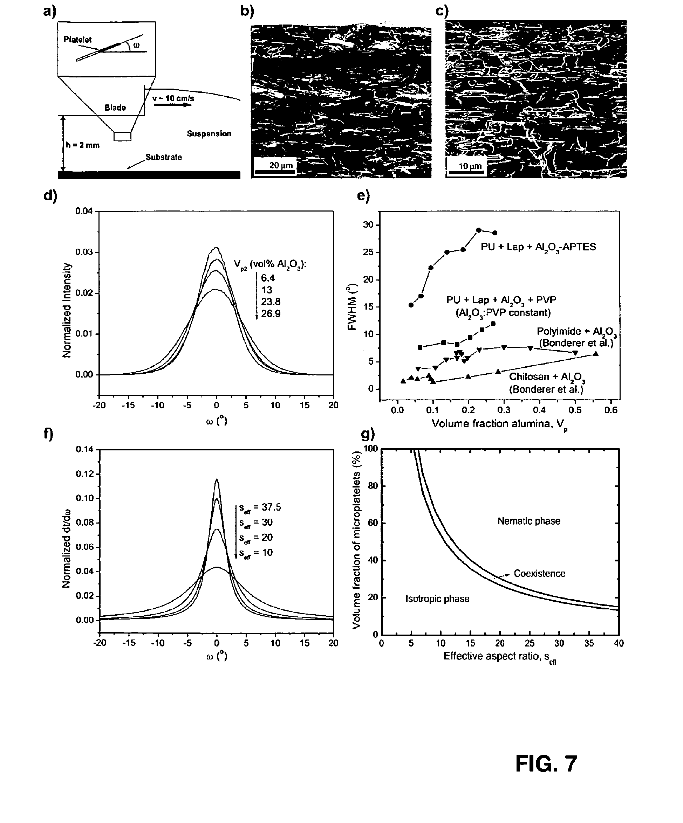

- Fig. 7: a) Schematic drawing illustrating the shear field applied to the platelet-containing suspension during tape casting; b,c) SEM cross-sections of polyurethane-based composites containing (b) 7 vol% laponite and 20 vol% alumina microplatelets modified with APTES and (c) 7 vol% laponite and 17 vol% alumina microplatelets modified with PVP; d) Normalized angular distribution of alumina microplatelets obtained by applying the X-ray diffraction rocking technique to composites containing increasing volume fractions of PVP- and APTES-modified platelets; e) Full width at half maximum (FWHM) values of the angular distribution curves obtained for the tape-cast composites investigated here as compared to other composites produced with a layer-by-layer technique; f) Theoretical normalized angular distribution expected from calculations for platelets of decreasing effective aspect ratio, s_{eff}; g) Volume fraction of microplatelets required for the formation of an ordered nematic phase as a function of the platelet effective aspect ratio;

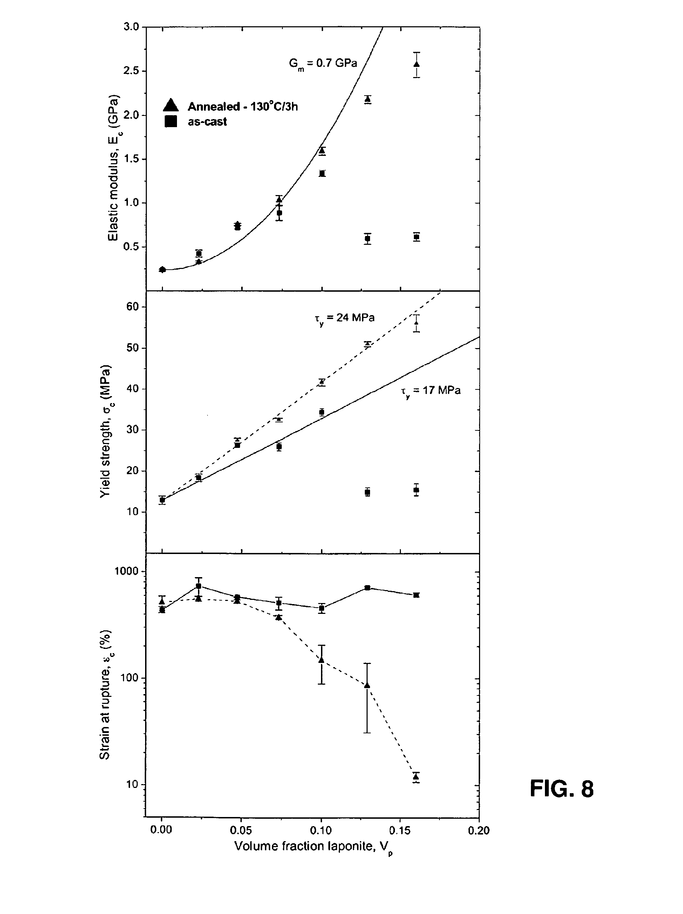

- Fig. 8: The elastic modulus, yield strength and strain at rupture of thermoplastic polyurethane as a function of the volume fraction of reinforcing laponite nanoplatelets; Data obtained for as-cast (squares) and annealed samples (triangles) are shown; Note that composites containing 19 vol% laponite were extremely brittle and thus could not be mechanically characterized even after the annealing step; Theoretical estimates for the elastic modulus and yield strength of the composites based on simple rule of mixtures are shown as fitting curves. Gₘ is the shear modulus of the polymer matrix, whereas τ_{y} is either the interfacial shear strength or the shear strength of the continuous matrix. The strain at rupture data are linked with lines to guide the eyes;

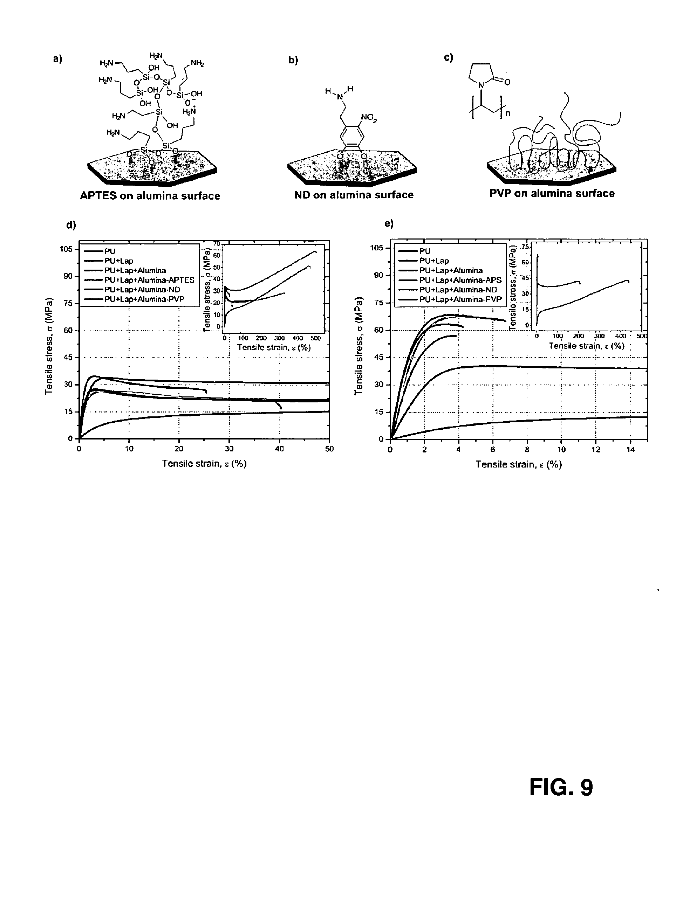

- Fig. 9: Schematic drawing of the expected surface chemistry on the alumina platelets after modification with (a) aminopropyltriethoxysilane (APTES), (b) nitrodopamine (ND) and (c) polyvinylpirrolidone (PVP); (d,e) Effect of these surface modifiers on the mechanical behavior of polyurethane-based composites containing 7.8 vol% laponite nanoplatelets (laponite:PU volume ratio of 1:9) and 18.5 vol% alumina microplatelets (d) before and (e) after annealing at 130°C for 3 hours; Stress versus strain results for pure polyurethane (PU) and polyurethane containing laponite (PU-Lap, laponite:PU volume ratio of 1:9) are also shown for comparison;

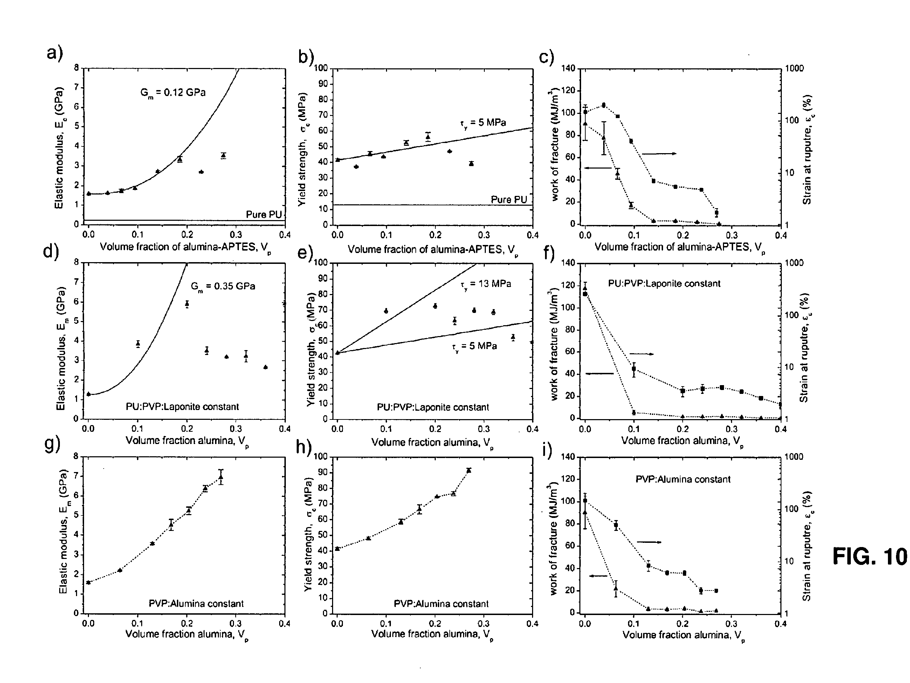

- Fig. 10: Mechanical properties of annealed hierarchical composites containing laponite nanoplatelets (laponite:PU volume ratio of 1:9) and increasing volume fractions of alumina microplatelets modified with (a-c) APTES and (d-i) PVP. The PVP concentration was fixed at a PU:PVP:Laponite volume ratio of 9.5:2:1 in graphs (d-f) and a PVP:Alumina volume ratio of 1:1.27 in graphs (g-i). Theoretical estimates for the elastic modulus and yield strength of the composites based on simple rule of mixtures are shown as fitting curves in (a,b) and (d,e). Gₘ is the shear modulus of the polymer matrix, whereas τ_{y} is either the interfacial shear strength or the shear strength of the continuous matrix. The dotted lines in (c,f,g-i) are guides for the eyes;

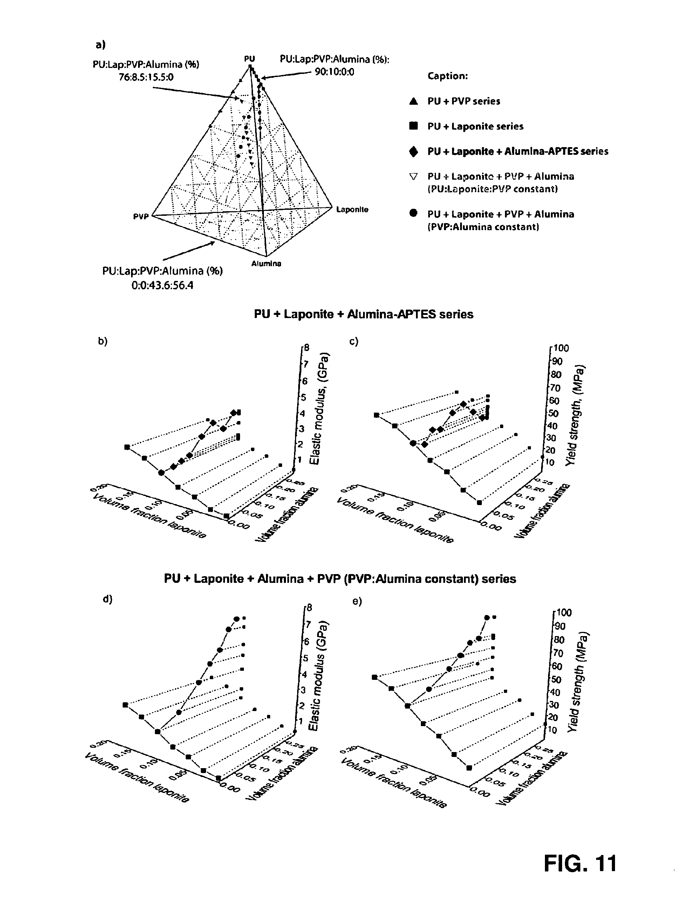

- Fig. 11: a) Quartenary phase diagram indicating the series of compositions investigated in this study; b,c) Mechanical properties of hierarchical composites (diamonds) consisting of pure polyurethane reinforced with APTES-modified alumina platelets at the microscale and laponite platelets at the nanoscale. d-e) Mechanical properties of hierarchical composites (filled circles) consisting of PU-PVP polymer blends reinforced with PVP-modified alumina platelets at the microscale and laponite platelets at the nanoscale; Properties of the respective composites reinforced only at the nanoscale are indicated by the red squares in (b-e) for comparison;

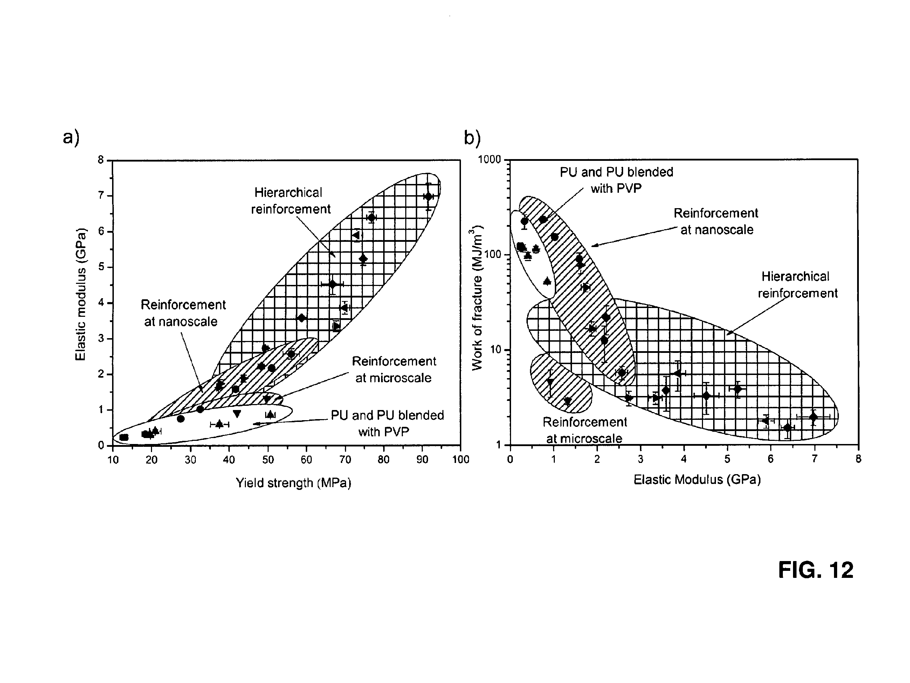

- Fig. 12: Range of mechanical properties covered by the polyurethanes and polyurethane-based composites investigated;

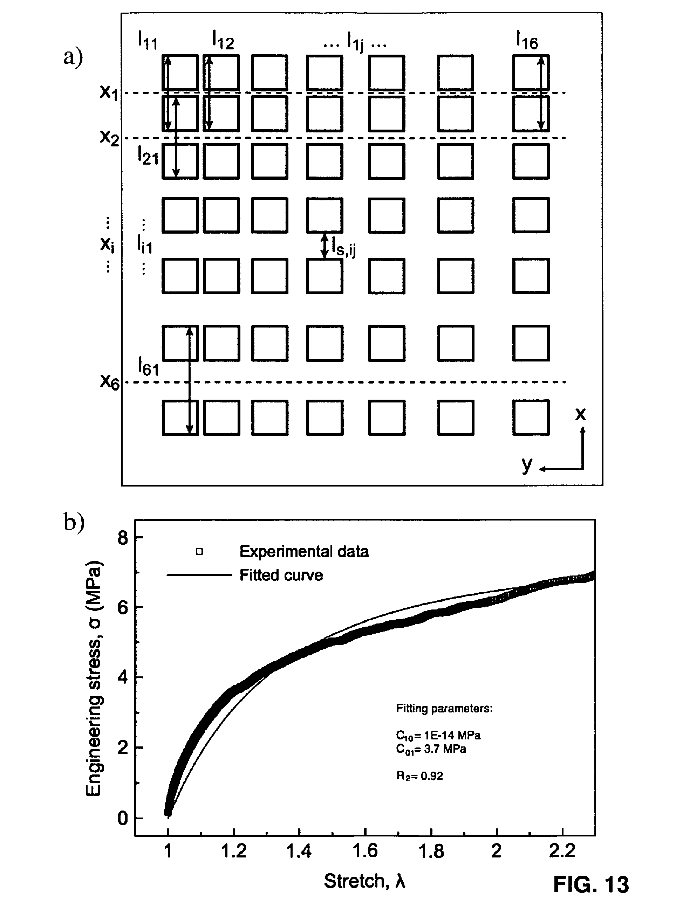

- Fig. 13: a) Schematic top view of the 2D array of patches on the surface of the elastomeric substrate, indicating the distances experimentally measured before and after stretching to determine the local in-plane mechanics of the 3D heterogeneous composite (Figure 1f). b) Engineering stress as a function of stretch (ε+1) for the substrate M0040 and the corresponding Mooney-Rivlin fit; the non-linear regression was performed up to a stretch of 2.3. c) Geometric model of the patch-substrate modules used in the finite element simulations, illustrating the free tetrahedral elements used for meshing. d) Strain distribution throughout the cross-section of the different patch-substrate modules investigated by FEM simulations;
- Fig. 14: Stress distribution at the interface between the patch and the elastomeric substrate for the different investigated systems;
- Fig. 15: Vickers Hardness as a function of the indentation load for the heterogeneous composite prepared through solvent welding of individual layers with different reinforcement levels and atomic layer deposition of 100nm-thick alumina layer as also given in Figure 1;
- Fig. 16: Definitions of the possible dimensions of nanodiscs, nanotubes, micro-platelets, microfibers and micro-ribbons used as reinforcement.

### DESCRIPTION OF PREFERRED EMBODIMENTS

### Making of composites:

To experimentally investigate the surface strains and the failure resistance of composites exhibiting architecture similar to the S-Grad design, graded modules using the hierarchical reinforcement approach described above were fabricated (E-Grad, Figure 3). In the context of these examples the geometry needed for flexible electronic applications is mainly focused on, but this shall not be construed to mean that the general approach as claimed is not possible for other applications such as elements for recreating a complete bone or teeth with all its internal gradients in elasticity etc. A highly stretchable, fully recoverable elastomeric substrate (Figure 3a) was produced by performing a two-step polymerization reaction of a 50:50 weight ratio mixture of hard and soft monomers in N,N-dimethylformamide (DMF), followed by casting into a silicone rubber mold (see details further below). Mechanically graded patches were formed by solvent welding and hot pressing individual layers with progressively higher elastic modulus using DMF as solvent. The elastic modulus was tuned to gradually increase from the bottom to the top of the patch by changing the type and concentration of reinforcing elements, as depicted in Figure 3b. A freeze-fractured cross-section of the resulting graded sample exhibits a smooth surface across the platelet-free polyurethane layers and no detectable interface between the platelet-reinforced layers (Figure 3c,d). This suggests that the macromolecules of the different original layers are effectively entangled and that a graded structure containing an interpenetrating polymer matrix was successfully created.

The effectiveness of the entangled polymeric matrix and the elastic modulus gradient in increasing the composite failure resistance was investigated by performing tensile tests on graded (E-Grad) and non-graded (E-7000) experimental samples prepared as described above. Remarkably, substrates containing the graded patch could be stretched by as much as 300% without failure due to localized internal stresses (Figure 4a). In contrast, composites exhibiting a homogeneous patch of the stiffest material (E-7000) delaminated at the interface between the patch and the substrate at strains between 150 and 200%. These results qualitatively agree with the FEM analysis and can be explained by the lower stress concentration at the patch-substrate interface predicted for the graded composite (Figure 2d).

Tensile mechanical tests were conducted to experimentally assess the local strain on the surface of graded (E-Grad) and non-graded (E-0040) patches as a function of increasing global deformations. The local strain was obtained by measuring the distance between the edges of the patch perpendicular to the load line (Figure 4b). In line with the FEM predictions, local strains lower than 1% were detected on the surface of the graded patch for global strains as high as 300%. Conversely, samples consisting of both patch and substrate made of the same polyurethane (E-0120, *E̅ₚₐₜ=* E_{sub}) displayed the predicted steady increase in local tensile strain for increasing global strains (Figure 4c and inset of Figure 2d). The inward bending effect observed in the simulation of the graded composite was confirmed by lateral recording the specimen during the tensile test (Figure 4b). Interestingly, the as-prepared graded patch developed an outward curvature after solvent welding and hot pressing the individual composite layers. This initial outward bending presumably results from the higher shrinkage of the substrate and the softer bottom layers of the graded patch upon removal of the welding solvent and release of the load applied during hot pressing.

To demonstrate the potential of such 3D graded composites in combining unusual functional properties, we deposited a 50-nm conductive gold layer on the top surface of the graded patch and measured its electrical response while stretching the underlying elastomeric substrate (Figure 5a,b). Because of its small thickness and poor interfacial adhesion, the gold layer is expected to start deforming and to exhibit increasing electrical resistance at tensile strains of about 1%; thus, much earlier than its strain-at-rupture of 20-30%. Since the strain of 1% is comparable to the failure tensile strain of high-performance semiconductor and dielectric layers (e.g. indium-gallium-zinc oxide and aluminum oxide), the electrical response of the gold layer can be taken as a simple indicator of the effectiveness of the graded composites in protecting brittle electronic devices in stretchable electronic applications. The stretching experiments revealed that the 3D graded composite can be globally strained by as much as 200% without any detectable increase in the electrical resistance of the gold layer (Figure 5c). This is in strong contrast with the sharp increase in resistance at approximately 1-2% strain obtained for a control sample consisting of a gold layer deposited directly on the elastomeric substrate. The 100-fold reduction in the local-to-global strain ratio enabled by the graded architecture outperforms previous attempts to obtain locally stiff islands that protect brittle inorganic layers from failure in stretchable electronics. While the step at the patch edges might be undesired in such application, other geometries can be readily obtained using other approaches to assemble the polyurethane compositions with different level of reinforcement, including tape-casting, screen-printing and 3D rapid prototyping techniques. Our recent demonstration that high-performance thin film transistors can be deposited and successfully operated on the surface of platelet-reinforced polymeric substrates confirms the great potential of using such graded, hierarchical composites in stretchable electronics and other functional devices requiring extreme gradients in elastic modulus. The proposed methodology could be further improved by exploring approaches to increase the thickness and the smoothness of the purely inorganic layer deposited on the hard side of the reinforced composite.

In summary, it is shown that tuning of the local reinforcement level of a thermoplastic elastomer in 3D can lead to polymer-based heterogeneous composites with unique set of mechanical properties within the same material, including for example millimeter-thick profiled sheets with an out-of-plane soft-to-hard transition spanning 2 decades in elastic modulus combined with a global in-plane stretchability higher than 300%. Such properties are achieved by reinforcing the soft elastomeric polymer matrix with hard molecular domains, nanoplatelets and microplatelets at progressively coarser hierarchical levels and at deliberate positions of the composite. Spatial control over the reinforcement level is possible by solvent welding individual layers with different concentrations of reinforcing elements. Our ability to create heterogeneous composites with locally tunable elastic modulus spanning over up to five orders of magnitude using a fully entangled polymer phase allows us to combine unusual functional properties that would not be achievable with homogeneous materials. In addition to the locally stiff and globally stretchable substrates demonstrated here, this method can be used to produce biological scaffolds with extreme mechanical gradients for regenerative medicine, durable dental restorations that more closely match the flaw-tolerant architecture of natural tooth, and tougher graded adhesives that reduce catastrophic failure of current fiber-reinforced composites. The approach can also be exploited to create bioinspired heterogeneous architectures that mimic the structural features of biological materials.

### Making of individual layers:

Large-area polymer-based composite films can be obtained by tape casting suspensions containing reinforcing particles dispersed in a solution of polyurethane in dimethylformamide (DMF), as schematically illustrated in Figure 6a, and as experimentally described further below. Suspensions with (laponite) nanoparticles can be prepared using a solvent exchange method in order to enable complete dispersion of the nanoplatelets and to favor their segregation into the hard segments of the polyurethane (Figure 6b).

The thickness of the individual composite films can range from 80 to 150 µm. Tuning the rheological behavior of the suspension prior to casting can be important to obtain homogeneous films with well-controlled thickness. Suspensions exhibiting an apparent yield stress of approximately 6 Pa and a pronounced shear-thinning behavior (Figure 6d) are normally fluid enough to ensure easy flow under the action of the shear stresses imposed by the blade during tape casting and at the same time are able to retain their shape after casting and thus avoid excessive spreading over the substrate. The finite yield stress and high viscosity at low shear rates of the cast suspension can also be important to avoid sedimentation of the alumina microplatelets during the drying process (Figure 6d). The presence of (laponite) nanoplatelets in the PU/DMF initial solution can be important to achieve such rheological behavior. Taking into account an approximate blade velocity of 10 cm/s and a blade height of 2 mm typically used in our experiments, we estimate a shear rate of 50 s⁻¹ during the tape casting process. At this shear rate, the suspension exhibits an apparent viscosity of 0.3 - 0.4 Pa.s, which allows for easy flow during casting and is also sufficiently high to prevent internal flow of particles and thus unwanted heterogeneities during the drying process.

Because of its ease of operation and up-scalability, tape casting enables the preparation of large areas of composite films that can be stacked together and hot-pressed to produce bulker composite parts, as illustrated in Figure 6c. This approach can potentially be used to fabricate composite components as large as those made using bulk processing techniques like extrusion or injection molding.

In addition to up-scalability, tape casting also induces favorable alignment of reinforcing particles due to the shear stresses applied under the blade in the casting direction (Figure 7a). The alignment of alumina microplatelets containing e.g. either polyvinylpyrrolidone (PVP) or aminopropyltriethoxysilane (APTES) as surface modifiers were confirmed by scanning electron microscopy of cross-sections of the as-cast films (Figure 7b,c). The degree of alignment of the microplatelets within the matrix was experimentally assessed through X-Ray diffraction using the rocking technique. Examples of the angular distribution of microparticles in tape-cast composites as a function of the volume fraction of microplatelets are shown in Figure 7d for films containing PVP. The full width at half maximum (FWHM) of the obtained angular distribution is taken as a measure of the degree of misalignment of the anisotropic particles within the material (Figure 7e).

Alumina platelets coated with PVP exhibit a very good alignment in the cast films, as evidenced by the low FWHM values in the range 7.6-11.9°. These values are relatively close to those achieved with the better controlled, but more cumbersome and time-consuming, layer-by-layer approach (Figure 7e). This contrasts with the somewhat less pronounced alignment observed for microplatelets coated with APTES molecules, which exhibit FWHM values ranging from 15.4° to 28.5°. For both surface modifiers, the degree of platelet alignment decreases for higher volume fraction of particles, as illustrated in Figure 7e.

Theoretical calculations were carried out for the verification of important parameters.

Figure 7f shows that the angular distribution of the normalized ratio dt/dω becomes broader for decreasing effective aspect ratios, s_{eff}. This implies that the alignment of reinforcing microparticles parallel to the shear stresses applied during tape casting requires anisotropic particles with high aspect ratio that are well dispersed within the suspension. Agglomeration of the individual microplatelets into larger clusters of lower effective aspect ratio should lead to poorer alignment under shear. One can further show that the minimum volume fraction of platelets increases significantly with a decrease of the platelet effective aspect ratio, s_{eff}, as indicated in Figure 7g. Thus, agglomeration is expected to decrease both the shear-induced and packing-induced alignment of microplatelets.

To understand the effect of inorganic platelets on the mechanical behavior of tape-cast films, the properties of composites reinforced only with laponite nanoplatelets shall be looked at. The incorporation of laponite alone into polyurethane films leads to composites with yield strength and elastic modulus that are up to 4.3-fold and 10.7-fold higher than that of the pure polyurethane matrix (Figure 8). Most importantly, this remarkable reinforcing effect is obtained without compromising the high ductility of the polymer matrix, leading to annealed composites with strain at rupture as high as 147% upon addition of 10vol% nanoplatelets (Figure 8). The ability of laponite particles to reinforce polyurethanes without impairing their high initial ductility has been attributed to the spontaneous preferential segregation of the nanoplatelets into the hard crystalline domains of the polymer. Laponite segregation into the hard domains is made possible by first completely exfoliating the nanoplatelets in a water/DMF solution followed by removal of the aqueous phase and incorporation of the polymer (Figure 6a).

Due to the limited fraction of hard domains in the polymer, the amount of nanoplatelets, in particular laponite platelets, that can be incorporated into the crystalline domains without impairing the polymer ductility normally has an upper limit at concentrations around 10vol%. Above this critical concentration, nanoplatelets, in particular laponite platelets, can start to accumulate in the soft domains of the polyurethane, eventually degrading the composite's mechanical properties (squares in Figure 8).

Such critical nanoplatelet concentration, in particular laponite concentration, increases from 10 to 16 vol% upon annealing of the composite, e.g. at 130°C for 3 hours (triangles in Figure 8). Differential scanning calorimetry indicates the appearance of an additional endothermic peak in composites subjected to the annealing step.

The effective reinforcement of laponite-containing composites with alumina microplatelets at a second hierarchical level is enhanced by an optimum interfacial bonding between the inorganic microplatelets and the polymer matrix, such as a polyurethane matrix. Such bonding enables stress transfer from the polymeric continuous phase to the strong and stiff microplatelets during mechanical loading. Bonding can be achieved using surface modifiers or coupling agents that connect the dispersed microplatelets to the surrounding polymer matrix through physical or chemical interactions.

Aminopropyltriethoxysilane (APTES), nitrodopamine (ND) and polyvinylpyrrolidone (PVP) are possible coupling agents between polymer (e.g. polyurethane) and the microplatelet surface (e.g. alumina surfaces). APTES can be attached to the platelet through condensation reactions between their hydrolysable -OC₂H₅ groups and the hydroxyl groups on the platelet surface. Due to the presence of three - OC₂H₅ groups per molecule, APTES molecules can also undergo self-condensation reactions, eventually leading to the formation of multilayers on the platelet surface. In contrast, nitrodopamine and related catechols/pyrogallols form well-defined monolayers on the surface of alumina particles through strong ligand exchange reactions between their -OH groups and the hydroxyl groups on the particle surface. PVP molecules are expected to adsorb weakly on the platelet oxide surface through polar interactions between -OH surface groups and the pyrrolidone polar groups of the macromolecule.

Despite the successful adsorption of the coupling agents on the platelet surface, the addition of 18.5vol% modified platelets to a polyurethane matrix did not lead to a significant reinforcing effect in as-cast composite films (Figure 9a). This is a clear evidence of a weak interfacial bonding between the modified platelets and the polymer matrix. Due to the predominantly polar nature of the functional groups present on the platelet surface upon adsorption of the coupling agents, a high interfacial bonding is only expected if the surface modified platelets are exposed to the polar hard segments of the polyurethane. Thus, the results suggest that the phase separation of hard and soft segments during processing does not lead to segregation of the hard segments near the surface of modified platelets.

The interfacial bonding between platelets and polymer matrix is markedly increased by annealing the composite at 130°C for 3 hours (Figure 9b). The strong interfacial bonding achieved through such heat treatment leads to a up to 145 and 130% increase in both the yield strength and elastic modulus of composites containing 18.5vol% platelets, regardless of the coupling agent used. This surprising increase in interfacial bonding probably results from microstructural changes in the polyurethane matrix during annealing. Our results indicate that the mobility of the PU macromolecules at 130°C is likely high enough to allow for molecular rearrangements that promote energetically favorable interactions between hard segments and the platelet surface. Because of the polar nature of the bare alumina surface, a strong interfacial bonding and reinforcing effect was observed even in composites containing unmodified platelets (Figure 9e).

Hierarchically reinforced composites can be obtained by incorporating increasing volume fractions of (alumina) microplatelets into polymer based, e.g. polyurethane-based, matrices containing 10 vol% of nanoplatelets, e.g. laponite nanoplatelets. At such laponite concentration the polyurethane is still sufficiently ductile to allow for the addition of up to 26.9 vol% of microplatelets before a significant decrease in the work of fracture takes place (Figure 10).

The elastic modulus, yield strength, work of fracture and strain at rupture of the resulting hierarchical composites are shown in Figure 5 for platelets coated with either APTES or PVP. The elastic modulus and yield strength data for volume fractions of microplatelets up to 20-25vol% can be reasonably described mathematically. The shear modulus Gₘ and the shear strength τ_{y} were used as fitting parameters to explain the dependence of E_{c} and σ_{c} on the volume fraction of microplatelets below 25vol% (Figure 10a,b and 5d,e). To obtain these fittings, it was assumed that the laponite-reinforced polymer behaves as the continuous matrix around the alumina microplatelets.

The parameters obtained by fitting rule of mixture relations to the experimental data provide information about the stress transfer from the laponite/polyurethane matrix to the alumina microplatelets. Stress transfer is determined by the phase in the close vicinity of the reinforcing microparticles, which in this case could be the polyurethane hard crystalline domains or a mixture of hard crystalline domains and soft amorphous matrix, either in the presence or absence of intercalated laponite platelets.

Most of the shear modulus and shear strength values obtained from the fitting are relatively close to values expected for bulk polyurethane or polyurethane-PVP blends (Table 1). The only exception is the Gₘ value obtained for composites containing PVP-coated microplatelets, which is surprisingly almost 2-fold higher than the Gₘ expected for the bulk polyurethane-PVP polymer blend.

**Table 1: Comparison between the shear modulus (Gₘ) and shear strength (τ_{y}) obtained as fitting parameters in Figure 5 with that estimated from tensile tests in bulk polyurethane and polyurethane-PVP blends.**

| | Gₘ (MPa) | τ_{y} (MPa) |
|---|---|---|
| ***APTES-coated microplatelets*** | | |
| From fitting the experimental data | 120 | 5 |
| Estimated for bulk polyurethane | 90 ^{a} | 6.5 ^{b} |

| ***PVP-coated microplatelets*** | | |
|---|---|---|
| From fitting the experimental data | 350 | 5-13 |
| Estimated for bulk polyurethane-PVP blend ^{a} | 170 ^{a} | 13.8 ^{b} |

| | | |
|---|---|---|
| ^{a} estimated from the experimental elastic modulus of bulk samples (*Eₘ*) using the relation *Gₘ* = *Eₘ*/2(1+ν) and assuming a Poisson ratio ν = 0.4. ^{b} estimated from the experimental tensile strength of bulk samples (*σₘ*) using the relation τ_{y} = *σₘ* /2 | | |

Despite the inconsistency observed in the more complex PVP-containing system, a theoretical analysis suggests that stress transfer to the microplatelets is governed by the shear properties of the bulk polymer matrix in the absence of laponite reinforcement. This indicates that the microscale platelets are likely surrounded by a mixture of unreinforced hard crystalline domains and soft amorphous matrix.

The hierarchical reinforcement of polyurethane with (laponite) nanoplatelets and (alumina) microplatelets modified with APTES leads to composites with maximum yield strength and elastic modulus of 56.3 MPa and 3.54 GPa, respectively (Figure 10a-c). These σ_{c} and E_{c} values are approximately 4-fold and 14-fold higher than those of the pure polymer matrix, respectively.

The incorporation of polyvinylpyrrolidone (PVP) into the system to improve the alignment of microplatelets and to form a stronger and stiffer polymer matrix further increases the absolute strength and the elastic modulus of the composites up to the remarkable values of 91.7 MPa and 6.97 GPa, respectively (Figure 10d,e,g,h). This corresponds to a 7-fold increase in yield strength and 29-fold increase in elastic modulus as compared to pure polyurethane. Such reinforcing effect is accompanied by a substantial decrease in the ductility of the composite, which is reduced from 500% in the pure polymer to only a few percent in the hierarchically reinforced film (Figure 10f,i).

The reinforcement of polyurethanes at two length scales allows us to achieve mechanical properties that could not be obtained using only one platelet size. This is illustrated in Figure 11, which compiles the different experimental series investigated, and the strength and elastic modulus of the resulting composites. The advantage of the hierarchical reinforcement concept is more evident in composites containing a PU-PVP blend as polymer matrix (Figure 11d,e). This probably results from the improved dispersion of the alumina microplatelets in the presence of PVP. The combination of nano- and microplatelets leads to a more effective reinforcement of the polymer blend because it allows for the addition of higher concentrations of the inorganic phase before a significant reduction in the work of fracture occurs. The selective segregation of the nanoplatelets into the PU hard domains is key to keep the laponite-reinforced PU-PVP matrix ductile and thus enable the further incorporation of alumina microplatelets at the next hierarchical level.

Polyurethane-based composites covering a wide spectrum of mechanical properties, from soft and rubbery to strong and stiff, can be obtained by deliberately reinforcing the polymer matrix with inorganic nano- and microplatelets. This is illustrated in Figure 12, which displays all the experimental data obtained in this study in single plots of the major mechanical properties.

The hierarchical reinforcement of polyurethane with nano- and microplatelets leads to materials with remarkably high strength and stiffness because it partly circumvents the undesired reduction in work of fracture that typically results from the addition of high concentrations of reinforcement at one single length scale. The incorporation of e.g. 5.3 vol% laponite nanoplatelets and 26.9 vol% alumina microplatelets into polyurethane-PVP blends leads to a 7-fold increase in yield strength and 29-fold increase in elastic modulus as compared to pure polyurethane, which is at least 60 and 170% higher than the values achieved using for example nanoplatelets alone. However, such strengthening effect still occurs at the expense of ductility, which is reduced from approximately 500% in pure polyurethane to 3-5% upon addition of the platelets. Due to the preferential segregation of laponite into the hard crystalline domains of the polyurethane, stress transfer to the nanoplatelets is enhanced by the presence of a strong and stiff domain surrounding the nano-reinforcement. In contrast, stress transfer to the alumina microplatelets seems to be primarily determined by the mechanical properties of bulk polyurethane, suggesting that no preferential segregation occurs at the microscale and that the presence of nanoplatelets in the surrounding matrix does not affect the transfer of stress to the microplatelets. Large-area polyurethane thick films and laminated bulk parts with tunable strength, stiffness and ductility were obtained using a simple, up-scalable tape casting process. The use of PVP as surface modifier resulted in less than 8° misalignment of the alumina microplatelets within the polymer matrix, which is not so far from the level of orientation that can theoretically be achieved with individual platelets of the same aspect ratio when subjected to shear. Annealing of the cast and dried composites at 130°C for 3 hours is needed to ensure efficient stress transfer from the polymer matrix to the hydrophilic reinforcing microplatelets, regardless of the hydrophilic molecules used as surface modifiers. The combination of nano- and micro- inorganic platelets as reinforcements of polymer matrices at different length scales significantly extends the range of strength and stiffness levels that can be achieved in polyurethane-based systems, indicating that the hierarchical reinforcing concept is a very promising approach to tailor the local mechanical properties of composites using a few number of reinforcing building blocks within the same polymer matrix.

### 1. Preparation of hierarchically reinforced polyurethane-based composites with inorganic micro- and nanoplatelets:

### Materials

The commercial thermoplastic polyurethane Elastollan C64D (BASF, Germany) was used as polymeric matrix in the platelet-reinforced composites. The hard segments of such polyurethane contain 1,6-hexanediol, 1,4-butanediol and 4,4'-diisocyanatodiphenylmethane, whereas the soft segments consist of an adipic acid-based polyester. Alumina platelets as microplatelets with diameter of 7.5 µm and thickness of 200nm (Figure 1e, Alusion®, aspect ratio: 37.5, Antaria Limited, Australia) and Laponite RD platelets as nanoplatelets with diameter of 25 nm and thickness of 1nm (aspect ratio: 25, ProChem, Switzerland) were used as reinforcing building blocks. N,N-dimethylformamide (DMF, Honeywell Inc., Germany), tetrahydrofuran (THF, Aldrich, Switzerland), acetic acid glacial (HAc, Carlo Erba Reagent Inc., Italy), polyvinylpyrrolidone (PVP, Mw = 40000 g/mol, Aldrich, Switzerland), 3-aminopropyltriethoxysilane (APTES, 98%, Aldrich, Switzerland), 6-nitrodopamine sulphate (ND, SuSoS, Switzerland) were of technical grade, unless otherwise stated.

### Surface modification of microplatelets

Alumina platelets were surface modified using three different coupling agents: APTES, ND and PVP. Without being bound to any theoretical explanation, it is assumed that APTES forms a multilayered structure due to the self-condensation of silanol groups, whereas ND adsorbs only as a monolayer onto the alumina surface. PVP is expected to adsorb through weak hydrogen-bonding interactions on the platelet surface.

The surface modification with APTES was performed in DMF using acetic acid as catalyst. In a typical reaction, 5 g of alumina platelets were added to a solution of acetic acid (2 mL) in DMF (400 mL). The mixture was stirred for approximately 20 minutes at room temperature. The resulting powder was washed five times with THF and dried in vacuum (10 mbar) at room temperature for 24 hours. The silanized platelets were characterized by FT-IR (DRIFT mode) and TGA and then kept under dry conditions until use.

The attachment of ND onto the alumina surface was also carried out in a DMF solution. In this case, 4 g of alumina platelets were added to 20 mL of a solution of ND in DMF (8 mM). The resulting mixture was stirred at room temperature for 24 hours. Next, the modified alumina platelets were washed 5 times with THF to remove any physically adsorbed ND from the alumina surface. The powder was dried in vacuum (10 mbar) at room temperature for 24 hours and then characterized by FT-IR (DRIFT mode) and TGA. The physical adsorption of PVP onto alumina surfaces was performed by first adding the required amount of PVP to DMF and stirring the solution at room temperature until complete dissolution of the polymer. Alumina platelets were then added into the PVP/DMF solution and the resulting mixture was stirred for 24 hours. Finally, the obtained mixture was directly used to prepare platelet/polymer suspensions for tape casting as described in the next sections.

### Preparation of platelet/polymer suspensions

Suspensions containing nano- and microplatelets were prepared by adding the inorganic components to DMF and then dissolving the PU pellets at room temperature.

Laponite nanoplatelets were exfoliated in DMF using the solvent-exchange procedure described by Liff et al in "High-performance elastomeric nanocomposites via solvent-exchange processing", Nature Materials. 2007; 6(1):76-83. In a typical procedure, 2 g of laponite were added to approximately 200 mL of deionized water and the resulting suspension was stirred until complete exfoliation of the nanoclay. Next, approximately 400 mL of DMF were added to the aqueous suspension and the resulting mixture was stirred for 2 hours. Water was then removed from the suspension through evaporation in a R-215 rotavapor (Buchi, Switzerland) at 76 mbar and 60°C. To ensure that a minimum amount of water remains in the final suspension, the bath temperature was raised slowly to 70°C as soon as a decrease in the vapor temperature was observed. The final concentration of laponite in DMF was determined by gravimetric analysis.

To prepare composites reinforced with nanoplatelets only, 107 mL of a 5.6 mg/mL suspension of laponite exfoliated in DMF was added to a 250mL Erlenmeyer flask and the total volume was completed with pure DMF to 160 mL. In the case of hierarchical composites, 2.149 g of alumina platelets were also added to the nanoplatelet suspension. Platelet/polymer suspensions used for tape casting were obtained by adding 2.4 g of PU pellets into the platelet suspensions and stirring overnight.

### Tape casting

The viscosity of the platelet/polymer suspension was adjusted by slowly evaporating DMF in a rotavapor (10 mbar, 60°C) until a total volume of approximately 80 mL was obtained. The viscous suspension was then poured onto a polyethylene (PE) substrate (15 cm x 30 cm). Tape casting was performed by hand in one specific direction using a doctor blade with a slit height of 2 mm. The remaining DMF was removed in a drying oven (Memmert, UNE 200, Germany) at 60°C for 24 hours. Before performing the mechanical tests, the dried composites were annealed at 130°C for 3 hours and kept in a dessicator for, at least, 24 hours.

### X-Ray diffraction

The alignment of alumina platelets in the polymer matrix was assessed by X-ray diffraction (XRD) using the rocking curve (ω scan) technique. In brief, a high-resolution scan is performed at high 2θ angles (85° < 2θ < 95°) and one diffraction peak is selected. The 2θ angle corresponding to the selected diffraction peak is fixed and the sample is slowly rocked by an angle ω while acquiring the data. In order to take into account tilt-defocusing and absorption effects, the data was corrected using the software TexturePlus, which was supplied by Mark Vaudin (NIST, Gaithersburg). The full width at half maximum (FWHM) of the resulting intensity versus ω curves was used as a measure of the platelet degree of misalignment. All XRD measurements were performed in a X'Pert PRO equipment (PANanalytical, The Netherlands).

### Surface analyses

Covalent attachment of coupling agents (APTES and ND) was confirmed by Diffuse Reflectance Infrared Fourier Transform (DRIFT, Perkin Elmer - Series 2000, USA) and Thermogravimetric Analysis (TGA/SDTA 851E, Mettler Toledo, Switzerland). DRIFT spectra (64 scans; resolution: 2 cm⁻¹) were obtained by mixing the platelets in KBr (2 wt%) and grinding the resulting powder in a mortar. TGA measurements were performed in air (50 mL/min) at a heating rate of 10°C/min.

### Differential Scanning Calorimetry (DSC):

DSC was performed in as-cast and annealed composites (DSC822, Mettler Toledo, Switzerland) using a heating rate of 10°C/min and a flow rate of 200 mL/min under nitrogen atmosphere.

### Microstructural characterization

Tape-cast samples were cut, dipped into liquid nitrogen and freeze fractured to reveal the cross-section. The cross section was then mounted in a sample holder, sputtered with a 5 nm-thick platinum layer and imaged using a scanning electron microscope (LEO 1530, Zeiss, Germany).

### Mechanical testing

Mechanical properties of composite films were measured under tensile mode in a universal mechanical testing machine (Instron 4411, USA). Standard dog bone samples were punched from 100 µm-thick composites films with the tested region being 12 mm x 2 mm. Samples were pulled at a strain rate of 10 mm/min. Elastic moduli were taken as the slope of the resulting stress-strain curves in the linear elastic regime. The yield strength of the material was taken as the intercept between the extrapolated slopes from the linear elastic regime and the plastic deformation region of the stress-strain curves. The work of fracture was calculated from the area under the stress versus strain curves. At least 3 samples were measured to obtain the reported average and standard deviation values. For standard deviations higher than 10%, 2 additional samples were tested and taken into account in the calculations.

### Bulk composite parts

Thicker composite parts were produced by stacking 20 equally-sized 100 µm-thick films obtained through tape casting. Solvent welding was performed in between individual films by applying a thin layer of DMF onto the two opposing surfaces of the films using a cotton swab. The films were then put in between two glass slides and firmly pressed by hand. The procedure was repeated until the 20 layers were stacked. The resulting material was put in the oven at 130°C for 3 hours to remove the excess of DMF and to ensure good adhesion between the laminates.

### 2. Preparation of hierarchically reinforced heterogeneous polyurethane-based composites:

### Materials

All chemicals were purchased from Aldrich Co. and were of analytical grade, unless otherwise stated. N,N-dimethylformamide (DMF, dried over molecular sieves), 4,4'-methylenebis(cyclohexyl isocyanate) (H-MDI, 90%), 1,4-butanediol (BDO, ≥ 99%); poly(tetrahydrofuran) (T1000, M_{w} = 1000 g/mol), glycerol ethoxylate (EG; M_{w} = 1000 g/mol) and dibutyltin dilaurate (DBTL) were used for the synthesis of polyurethanes with different hard-to-soft segment ratios. Composites were prepared using a commercial thermoplastic polyurethane (Elastollan C64D, BASF, Germany), N,N-dimethylformamide (DMF, ACS grade), polyvinylpyrrolidone (PVP, Mw = 40000 g/mol), alumina platelets with average diameter of 7.5 µm and thickness of 200 nm (Alusion, Antaria Limited, Australia) and laponite platelets with diameter of 25 nm and thickness of 1 nm (Laponite RD, ProChem, Switzerland).

### Polyurethane synthesis

Polyurethane syntheses were carried out under nitrogen atmosphere in a three-neck round bottom flask equipped with a reflux condenser. H-MDI and BDO were used as hard segments, T1000 as soft segment, and EG as cross-linker. The hard-to-soft segment ratio was adjusted by changing the proportion between T1000 and BDO. Firstly, the glassware was dried with a heating gun at 350°C to remove any adsorbed water. Then, a prepolymer was prepared by loading the flask with H-MDI followed by a dropwise addition of a solution of T1000 and EG in DMF under magnetic stirring (600 rpm). The resulting mixture was kept at 80°C for 3 hours. After formation of the prepolymer, the temperature was reduced to 60°C and a solution of BDO in DMF was added to the flask to proceed with the polymerization reaction for a time period of 1 hour. Finally, DBTL was added and stirred for additional 30 minutes. The reactant concentrations were adjusted to keep a constant NCO:OH molar ratio of 1:1 with a 5wt% excess of H-MDI. The final concentration of polyurethane in DMF was 0.2 g/mL. Polymer films were obtained by casting the solution onto silicone molds and dried at 60°C for 24 hours. Table 2 summarizes the amounts of chemicals used for the polyurethane syntheses.

**Table 2: Quantities used for the synthesis of polyurethanes with different hard-to-soft segment ratio.**

| Sample | Elastic modulus (MPa) | % hard segments | H-MDI (mL) | T1000 (g) | EG (g) | BDO (mL) | DBT L (µL) | DMF (mL) |
|---|---|---|---|---|---|---|---|---|
| M0002 | 1.8 | 30 | 2.070 | 4.8294 | 0.0706 | 0.205 | 70 | 35 |
| M0004 | 4.5 | 40 | 2.590 | 4.1307 | 0.0693 | 0.430 | 70 | 35 |
| M0040 | 41.5 | 50 | 3.108 | 3.4300 | 0.0703 | 0.650 | 70 | 35 |
| M0110 | 108.0 | 60 | 3.627 | 2.7300 | 0.0705 | 0.872 | 70 | 35 |
| M0550 | 554.1 | 70 | 4.146 | 2.0307 | 0.0698 | 1.095 | 70 | 35 |

### Preparation of polyurethane-based composites

Composites reinforced with nano- and micro-platelets were prepared following the procedure described above in experimental section 1. In summary, alumina platelets were first dispersed in a solution of PVP in DMF and kept under stirring for 12 hours. Next, polyurethane pellets (Elastollan) and a suspension of laponite in DMF (obtained through solvent exchange method) were added to the alumina/PVP suspension. The resulting mixture was kept at room temperature and under stirring (600 rpm) until the polymer pellets were dissolved. The viscosity of the mixture was adjusted by removing DMF in an evaporator at 10 mbar and 60°C (R-215 Rotavapor, Buchi, Switzerland) before casting the fluid on polyethylene plates using a doctor blade (height = 1 mm). The remaining DMF was removed by placing the sample in a conventional oven (Memmert, UNE 200, Germany) at 60°C for 24 hours. The obtained composites were finally annealed at 130°C for 3h. Table 3 depicts the composition of the platelet-reinforced composites investigated in this study.

**Table 3: Quantities used for the preparation of platelet-reinforced composites.**

| Sample | Elastollan (g) | PVP (g) | Laponite (g) | Alumina (g) | DMF (mL) |
|---|---|---|---|---|---|
| M1600 | 2.4 | - | 0.6 | - | 160 |
| M3600 | 2.4 | 0.353 | 0.6 | 1.518 | 160 |
| M7000 | 2.4 | 1.080 | 0.6 | 4.633 | 160 |

### Preparation of the patch-substrate composite modules for local strain and resistance measurements

Patch-substrate modules for mechanical and electrical testing were prepared by first assembling individual films (M0550, M1600, M3600 and M7000) into multilayered 0.4 cm x 5 cm ribbons using the solvent welding technique. For that purpose, a small amount of DMF was first applied on the two surfaces to be welded using a cotton swab. Pressure was manually applied onto the multilayer stack by squeezing the sample in between glass slides. The patch layers were assembled from the softest to the hardest material and subsequently welded onto a 5 cm x 5 cm x 0.19 mm M0040 substrate. The composition and thickness of each individual layer is indicated in Table 4. Finally, the samples were dried at 60°C for 12 hours in a vacuum oven. 2-mm wide dogbone samples were cut from the large M0040 substrate in the direction perpendicular to the multilayered ribbon to obtain patch-substrate modules with the architecture shown in Figure 2a-c. For the resistance measurements, a 50-nm thick gold layer was sputtered on the top of the stiffest layer. Sputtering was carried out using a working distance of 50 mm, current of 40 mA and pressure of 2 x 10-5 mbar for 200 seconds. Electrical contacts were made by gluing 100µm-diameter copper wires to the gold layer using an epoxy resin.

**Table 4: Compositions and thicknesses of individual layers used to obtained graded and non-graded patches.**

| Sample | Layer 1 | Layer 2 | Layer 3 | Layer 4 |
|---|---|---|---|---|
| | (thickness/µm) | (thickness/µm) | (thickness/µm) | (thickness/µm) |
| E-0040 | M0040 | - | - | - |
| | (186 ± 23) | - | - | - |
| E-7000 | M7000 | M7000 | M7000 | M7000 |
| | (71 ± 6) | (71 ± 6) | (71 ± 6) | (71 ± 6) |
| E-Grad | M0550 | M 1600 | M3600 | M7000 |
| | (91 ± 9) | (47 ± 7) | (48 ± 12) | (71 ± 6) |

### Preparation of 3D heterogeneous composite with tunable in-plane elastic moduli in the out-of plane and in-plane directions

The 3D heterogeneous composite shown in Figure lf was prepared by first solvent welding 5 cm x 5 cm individual layers of the compositions M0550, M1600, M3600, M7000, as described above. The resulting multilayered welded film was cut into 5 mm x 5 mm patches using a scalpel. Finally, the patches were welded onto a 190 µm-thick M0040 substrate by applying DMF on both surfaces and manually pressing them together using glass slides. Patches welded on the top of the substrate were locally heated (60 °C) with a heating gun to ensure good adhesion between the materials and to remove the remaining solvent.

### Tensile tests

Single layer materials were evaluated under tensile mode in a universal mechanical testing machine (Instron 4411, USA). A strain rate of 2.5 mm/min was applied to pure polyurethane samples (M0002 to M0550), whereas polyurethanes reinforced with nano- and/or microplatelets (M0330 to M7000) were tested at 10 mm/min. Control experiments showed that the elastic moduli of platelet-reinforced polyurethanes decrease approximately 10-20% by reducing the strain rate from 10 to 2.5 mm/min, indicating that the order of magnitude comparison shown in Figure 1a is still valid despite the different strain rates used for mechanical characterization. Standard dog bone samples with a rectangular central region of 12 mm x 2 mm were punched from the materials for the tensile tests. Elastic moduli were taken as the slope of the resulting stress-strain curves in the linear elastic regime. The reported values and standard deviations were calculated from a minimum of 3 specimens.

### Local strain measurements on patch-substrate modules

A macroscope (Z16 APO, Leica, Switzerland) was used to track the local strain on patch-substrate modules while straining the materials at a constant rate of 2.5 mm/min. Image acquisition was synchronized with the global strain applied by the universal mechanical testing machine. Images were taken with time intervals of 10 seconds and were afterwards analyzed using the software ImageJ. The local strain was measured from images taken from the lateral cross-section of the sample in order to account for bending of the patch during stretching.

### Local strain measurements on 3D heterogeneous composites

To investigate the in-plane local elastic behavior of the 3D heterogeneous composite shown in Figure 1f, we measured the distance between consecutive patches on the sample surface (lᵢⱼ) before and after globally stretching the underlying substrate along the x-axis (Figure 13a). Samples were stretched up to 100% at a constant rate of 2.5 mm/min.

Table 5 shows the measured distances and the calculated local strains (εₗ) for different positions on the sample surface. Local distances within regions comprising solely the elastomeric substrate were also measured (l_{s,ij} in Figure 13a) and were used to estimate the local strain of the substrate alone. Such strain (εₛ) was found to be approximately constant at a value of 180 ± 17% throughout the entire sample. From this averaged εₛ value and the stress-strain curve of the elastomeric substrate (Figure 3a), we estimate that the polymer region between patches is subjected to a local stress, σₛ, of 8.1 MPa during stretching.

Assuming the modular 3D composite to behave like elastic elements connected in series (Reuss model), we use the local stress σₛ as a good approximation of the global stress σ_{g} applied to the composite under 100% global strain. Dividing the estimated σ_{g} by the measured local deformation εₗ, we obtained a local effective elastic modulus of the composite for different positions along its surface (Table 5 and Figure 1g).

**Table 5: Experimental average distances measured at different positions (xᵢ) of the 3D composite before (l₀) and after (l₁₀₀) applying 100% tensile strain along the x-axis (Figure S1). The distances l₀ and l₁₀₀ correspond to averages obtained from lᵢⱼ data for patches within the entire row i. εₗ and Eₗ correspond to the calculated average local strain and effective elastic modulus, respectively.**

| Position, *i* | xᵢ (cm) | *l₀* (cm) | *l₁₀₀* (cm) | *εₗ* (%) | *Eₗ* (MPa) |
|---|---|---|---|---|---|
| 1 | 0.56 | 1.14 | 1.21 | 6.34 | 127.7 |
| 2 | 1.23 | 1.20 | 1.41 | 17.73 | 45.7 |
| 3 | 1.98 | 1.30 | 1.72 | 32.33 | 25.1 |
| 4 | 2.80 | 1.38 | 1.96 | 42.37 | 19.1 |
| 5 | 3.70 | 1.46 | 2.24 | 53.35 | 15.2 |
| 6 | 4.71 | 1.51 | 2.50 | 65.49 | 12.4 |

### Electrical resistance measurements

The electrical resistance of a 50 nm-thick gold layer deposited on the surface of a graded patch (E-Grad in Figure 5) was determined by measuring the voltage across the layer for a constant current of 100 mA while straining the patch-substrate module in an universal mechanical testing machine. By synchronizing the electrical and mechanical measurements, we obtained the voltage across the film as a function of the externally applied strain. Samples were pulled at a strain rate of 2.5 mm/min.

### Finite element method (FEM) simulations

FEM simulations were carried out using the software Comsol Multiphysics (version 4.2a) to qualitatively analyze the effect of different elastic modulus profiles on the mechanical response of the patch-substrate modules (Figure 2). Ideal interfaces between the different layers of the patch and the substrate were assumed. The substrate and the patches were mechanically described using 2-term Mooney-Rivlin and linear elastic material models, respectively. The mathematical model was fitted to the experimental stress versus stretch curve for the substrate M0040 to obtain the constants C10 and C01 of the engineering stress (Figure 13b).

The shear modulus (G) and the bulk modulus (K) of the material were calculated. In these calculations, a Poisson's ratio of 0.49 was assumed for the M0040 material. The exact choice of the Poisson's ratio was found to have little effect on the result of the simulation, with the stress and the strain throughout the patch decreasing by less than 12% when the Poisson ratio is changed from 0.49 and 0.40. The mechanical properties of individual compositions used for the simulations are listed in Table 6.

**Table 6: Mechanical properties of the individual layers of the patch-substrate modules used in the finite element simulations.**

| Properties | S-M0040 | S-M0550 | S-M1600 | S-M3600 | S-M7000 |
|---|---|---|---|---|---|
| Mechanical | Mooney- | Linear | Linear | Linear | Linear |
| model | Rivlin | elastic | elastic | elastic | elastic |
| Density (kg.m⁻³) | 1200 | 1200 | 1330 | 1650 | 2010 |
| Elastic modulus (MPa) | | 550 | 1600 | 3600 | 7000 |
| Poisson's ratio | 0.49 | 0.40 | 0.35 | 0.32 | 0.30 |
| Model parameter C₀₁ (MPa) | 3.7 | - | - | - | - |
| Model parameter C₁₀ (MPa) | 10⁻¹⁴ | - | - | - | - |
| Bulk modulus, K (MPa) | 367.5 | - | - | - | - |

Simulations were performed by applying a prescribed longitudinal global strain (ε_{g}) along the long-axis of the module (y-axis in Figure 2), while keeping the other end of the substrate fixed (displacement equals to zero). The patch-substrate module was meshed using free tetrahedral elements (calibrated for general physics in Comsol). Maximum and minimum element sizes were set to 0.24 mm and 0.0024 mm, respectively (see Figure 13c). Other meshing parameters include: maximum element growth rate (1.3), resolution of the curvature (0.2) and resolution of narrow regions (0.1). Calculations were performed using Comsol's structural mechanics package under stationary mode.

The FEM simulations for patch-substrates elongated by 25% in the y direction (Figure 2) reveal that the highest stresses occur at the interface between the patch and the elastomeric substrate (Figure 14). The shear stress τ_{yz} is particularly high at the edge of the patch, whereas the normal stress τ_{yy} increases from the edge towards the center of the patch (Figures 14a,c). This analysis suggests that the edges and the center of the patch-substrate interface are the most probable sites for yielding and fracture initiation. Among the simulated architectures, the highest τ_{yz} values at the interface were found to be 8.4 MPa, 10.4 MPa and 8.4 MPa for the S-0550, S-7000 and S-Grad samples, respectively. The highest normal stresses τ_{yy} at the interface were found to follow the same trend, with values of 22.5 MPa, 31.3 MPa and 23.6 MPa for the S-0550, S-7000 and S-Grad specimens, respectively. Our experimental results confirm that the edges were more prone to initial failure while elongating the patch-substrate in the y-direction (see Figure 4b). Such edge delamination was found to propagate further across the interface in samples containing the stiffest homogeneous patch (E-7000), eventually causing full interfacial delamination (Figure 4a). In contrast, the lower interfacial stress peaks of the graded architecture prevent further propagation of the delaminated edge for strains as high as 300%.

In addition to the stresses at the patch-substrate interface, the FEM simulations also provide important insights into the strain distribution throughout the investigated patch-substrate modules. The overall response of the modules to external uniaxial stretching differed considerably depending on the average elastic modulus of the patch (*E̅ₚₐₜ*) relative to the elastic modulus of the underlying substrate (E_{sub}). Figure 13d shows that for *E̅ₚₐₜ* = E_{sub}, the patch experiences a combination of bending at the edges and stretching at its center. In contrast, patches with *E̅ₚₐₜ* > E_{sub} exhibited predominantly inwards bending upon uniaxial stretching. The implications of these different responses to the strain distribution within the patch are discussed above.

## Claims

1. Reinforced composite material based on a polymer matrix with reinforcing particles embedded therein,
wherein the polymer matrix is based on a polymer with soft and hard domains, wherein the reinforcement particles comprise
inorganic nano-platelets in the polymer matrix in a volume fraction in the range of 0.01%-50%, wherein the inorganic nano-platelets have a thickness in the range of 0.3-50 nm;
as well as inorganic micro-platelets in a volume fraction in the range of 1 %-90%, wherein the inorganic micro-platelets have a thickness in the range of 10 nm-100 µm.

2. Reinforced composite material according to claim 1,
wherein the inorganic nano-platelets have a thickness in the range of 0.3-50 nm and a length and/or width in the range of 5-500 nm, with the proviso that the largest length and width is at least twice as large as the thickness;
and/or wherein the inorganic micro-platelets have a thickness in the range of 10 nm-100 µm and a length and/or width in the range of 100 nm-10 mm, with the proviso that the largest length and width is at least twice as large as the thickness.

3. Reinforced composite material according to claim 1 or 2, wherein the nano-platelets are present in a volume fraction in the range of 1-10% and/or the micro-platelets are present in a volume fraction in the range of 10-35%,
and/or wherein the inorganic nano-platelets have a thickness in the range of 0.3-10 nm and/or a length and/or width in the range of 20 nm-200 nm, and wherein preferably the inorganic nano-platelets are laponite, montmorillonite, other synthetic and natural clays and/or mica particles;
and/or wherein the inorganic micro-platelets have a thickness in the range of 10 nm-50 µm or 100 nm-10 µm and/or a length and/or width in the range of 200 nm-5 mm, preferably with a thickness in the range of 200 nm-500 nm, and wherein preferably the inorganic micro-platelets are based on alumina, silicon carbide, glass, aluminium boride, graphene, graphite or combinations thereof, wherein further preferably the inorganic micro-platelets are surface modified with at least one coupling agent, preferably selected from the group of APTES, ND and PVP.

4. Reinforced composite material according to claim 1, 2 or 3, wherein the material is in the form of a layer with a thickness of at least 1 nm, preferably in the range of 50 µm-200 µm, or in the range of 100 µm-200 µm and wherein preferably the layer as being annealed at a temperature of at least 60°C, preferably in the range of 80-140°C, within a time span of at least 10 min., preferably in the range of 30 min-5 hours, more preferably in the range of 2-4 hours, at the pressure in the range of 0.01 mbar-2 bar, preferably in the range of 0.8-1.2 bar.

5. Reinforced composite material according to any of the preceding claims, wherein the polymer matrix is based on a semicrystalline block copolymer, preferably containing hydrophilic and hydrophobic segments, based on at least one of the following systems: diols, dimerdiols, polyoxyalkylenes, polytetramethylene oxide, polyoxymethylene, polyethyleneglycol, polyurethanes, polyureas, polyamides, polybutyrene, polyisoprene, polymethacrylates, polycarbonates, polyolefins, polyesters, polyethers, polyacrylic acids, polyacetals, polyethylene terephthalate, polyacrylonitrile, polystyrene, epoxy and combinations thereof, in particular based on polyurethanes, particularly on C2-C6 alkylenediol, and aromatic diisocyanates forming hard segments and on polyesters and polyethers, preferably adipic acid based polyesters forming the soft domains
and/or, wherein the polymer matrix is **characterized by** a glass transition temperature in the range of above -100°C, preferably in the range of (-80)°C- (-10)°C and a glass transition temperature or melting temperature or decomposition temperature lower than 300°C, preferably in the range of 60-180°C.

6. Reinforced composite material according to any of the preceding claims, wherein the polymer matrix is based on a blend exhibiting phase segregation with hard phase dispersed in a soft matrix or a soft phase dispersed in a hard phase with phases based on polytetramethylene oxide, polyoxymethylene, polyethyleneglycol, polyurethanes, polyureas, polyamides, polybutyrene, polyisoprene, polymethacrylates, polycarbonates, polyolefins, polyesters, polyethers, polyacrylic acids, polyacetals, polyethylene terephthalate, polyacrylonitrile, polystyrene and epoxy.

7. Multilayer polymeric reinforced composite material comprising at least two adjacent reinforced composite material layers according to claim 3 joined in a solvent welding and/or direct solution casting, spraying or printing process, in a coextrusion, and/or sequential injection molding wherein the adjacent layers have different reinforcement degrees in as far as the nano-platelets and/or the micro-platelets are concerned, leading to a gradient in in elastic moduli in a direction perpendicular to the layer plane of at least 10 MPa/mm, preferably in the range of 1000-100,000 MPa/mm.

8. Multilayer polymeric reinforced composite material according to claim 6, wherein the difference in volume fraction of nano- and/or micro-platelets in the adjacent layers is at least 0.01%, preferably at least 1%, more preferably in the range of 5-20% or 2 - 5 %.

9. Multilayer polymeric reinforced composite material according to any of claims 7-8, wherein it comprises at least 3, preferably at least 5, or preferably in the range of 5-15 mutually adjacent reinforced composite material layers joined in a solvent welding, coextrusion, sequential injection molding and/or direct solution casting, spraying or printing process.

10. Multilayer polymeric reinforced composite material according to any of claims 7-9, wherein the multilayer polymeric reinforced composite material is provided as a patch or strip on or embedded in an elastic carrier layer, wherein preferably the elastic carrier layer is based on the same or similar polymer material as the polymer matrix of the multilayer polymer-based reinforced composite material.

11. Multilayer polymer-based reinforced composite material according to claim 7-10, wherein along a direction essentially perpendicular to the layer plane sequential adjacent polymeric reinforced composite material layers have increasing or decreasing volume fraction loadings of nano-platelets and/or micro-platelets, and/or, in case of more than two adjacent layers along that sequence of adjacent layers have increasing or decreasing volume fraction loadings of nano-platelets and/or micro-platelets or at least partly alternating volume fraction loadings of nano-platelets and/or micro-platelets.

12. Multilayer polymer-based reinforced composite material according to any of claims 7-11, wherein at least one electrically conducting layer and/or electronic component is deposited and/or soldered and/or glued on the surface of the composite with the highest elastic modulus.

13. Method for making a multilayer polymer-based reinforced composite material according to any of claims 7-12, wherein in a first step the inorganic nano-platelets and inorganic micro-platelets are, if need be after surface modification thereof, suspended in a solvent or solvent mixture, the polymeric matrix material or a corresponding precursor material is added to the suspension, and this composite suspension is applied in a solution casting, spraying or printing process to form, after drying or consolidation, and optional annealing, a layer of polymer-based reinforced composite material, and wherein on such dried/consolidated layer of polymer-based reinforced composite material one or several further polymer-based reinforced composite material layers are applied with different reinforcement degrees in as far as the nano-platelets and/or the micro-platelets are concerned.

14. Method according to claim 13, wherein the further layers are either first produced from differently reinforced composite suspensions and dried/consolidated, and subsequently solution welded to the surface of the initial layer, or are sequentially directly applied in a solution casting, spraying or printing process from differently reinforced composite suspensions and dried/consolidated, wherein the layers are either be individually annealed and/or the multilayer polymer-based reinforced composite material block is annealed as a whole after the joining of the layers.

15. Use of a multilayer polymer-based reinforced composite material according to any of claims 7-12 as a substrate or a housing for an electronic and/or electric component, as part of an implant or surgery element or as a complete implant or surgery element, or as a construction material.
